# EUROPEAN PATENT APPLICATION

(11) **EP 4 654 637 A1**
(43) Date of publication of application: **26.11.2025**
(21) Application number: 23922361.3
(22) Date of filing: 31.10.2023
(51) Int. Cl.: H04W 8/24

(54) **METHOD AND APPARATUS FOR REPORTING CAPABILITY INFORMATION**

(30) Priority: 17.02.2023 CN 202310176223
(71) Applicant: Huawei Technologies Co., Ltd., Shenzhen, Guangdong 518129 (CN)
(72) Inventor: SHA, Tong, Shenzhen, Guangdong 518129 (CN); LI, Bingzhao, Shenzhen, Guangdong 518129 (CN); LIU, Ye, Shenzhen, Guangdong 518129 (CN); HU, Dan, Shenzhen, Guangdong 518129 (CN); WANG, Jin, Shenzhen, Guangdong 518129 (CN)
(74) Representative: Pfenning, Meinig & Partner mbB
(86) International application number: PCT/CN2023/128696
(87) International publication number: WO 2024/169245

(57) **Abstract**

This application relates to the field of communication technologies, and provides a method for reporting capability information and an apparatus. The method includes: receiving first capability enquiry information from a network device; and reporting first capability information to the network device, where the first capability information indicates capability information of K band combinations supported by a terminal device and an MSD improvement capability of the terminal device for N band combinations, the N band combinations are combinations of bands in the K band combinations, K is a positive integer, and N is a positive integer. According to the method, signaling overheads for reporting the MSD improvement capability by the terminal device can be reduced.

## Description

This application claims priority to Chinese Patent Application No. 202310176223.2, filed with the China National Intellectual Property Administration on February 17, 2023 and entitled "METHOD FOR REPORTING CAPABILITY INFORMATION AND APPARATUS", which is incorporated herein by reference in its entirety.

### TECHNICAL FIELD

This application relates to the field of communication technologies, and in particular, to a method for reporting capability information and an apparatus.

### BACKGROUND

Because different user equipments (User Equipment, UE) have different hardware or software versions, the different UEs have different UE capabilities (UE Capability). To better serve a UE, a network device needs to know a UE capability of the UE, to configure a proper working mode for the UE.

For example, after the network device establishes a connection to the UE (that is, a terminal device), the network device sends UE capability enquiry (UE Capability Enquiry) information to the UE. The UE reports a radio access capability of the UE in UE capability information (UE Capability Information) based on the UE capability enquiry information, where the UE capability information includes a band combination supported by the UE. In some band combinations, due to harmonic interference, intermodulation interference, or the like, maximum sensitivity degradation (Maximum Sensitivity Degradation, MSD) occurs when the terminal device receives a downlink wanted signal, and downlink receiving performance of the terminal device is affected. To improve the receiving performance, the terminal device may improve the MSD by improving hardware performance, and report an MSD improvement capability of the terminal device to the network device. However, when the terminal device reports the MSD improvement capability of the terminal device, signaling overheads for reporting the MSD improvement capability may be excessively large. Therefore, how to reduce the signaling overheads for reporting the MSD improvement capability by the terminal device is a problem that currently needs to be urgently resolved.

### SUMMARY

This application provides a method for reporting capability information, to reduce signaling overheads for reporting an MSD improvement capability by a terminal device.

According to a first aspect, a method for reporting capability information is provided. The method may be performed by a terminal device, or may be performed by a chip used in the terminal device. The following uses an example in which the method is performed by the terminal device for description. The method includes: receiving first capability enquiry information from a network device; and reporting first capability information to the network device, where the first capability information indicates capability information of K band combinations supported by a terminal device and a maximum sensitivity degradation MSD improvement capability of the terminal device for N band combinations, the N band combinations are combinations of bands in the K band combinations, K is a positive integer, and N is a positive integer.

Because the terminal device reports the supported K band combinations in the first capability information, different band combinations in the K band combinations may include one or more same bands. For example, in the K band combinations, one band combination X1 includes a band A, a band B, and a band C (band A+band B+band C), and another band combination X2 includes the band A, the band B, and a band D (band A+band B+band D). Both the band combination X1 and the band combination X2 include the band A and the band B. If the terminal device supports an MSD improvement capability of a band combination (that is, band A+band B) including the band A and the band B, regardless of whether the band A and the band B are included in the band combination X1 or the band combination X2, the MSD improvement capability of (band A+band B) is the same, or MSD improvement values of (band A+band B) are within a same interval range. If the terminal device separately reports MSD improvement capabilities of the band combination X1 and the band combination X2, signaling overheads of the first capability information are increased. However, in this application, the terminal device sends the capability information of the K band combinations and information of the N band combinations with the MSD improvement capability as two pieces of independent information (for example, two independent fields) to the network device. Because the N band combinations are the combination of the bands (for example, band A+band B) in the K band combinations, and an MSD improvement capability of each of the N band combinations is only reported to the network device once, repeated reporting of an MSD improvement capability of a band combination including some same bands in the K band combinations is avoided, and the signaling overheads for reporting the MSD improvement capability by the terminal device are reduced.

Optionally, the first capability information includes first indication information and second indication information, the first indication information indicates the K band combinations supported by the terminal device, and the second indication information indicates the MSD improvement capability of the terminal device for the N band combinations.

The terminal device separately reports, by using the first indication information and the second indication information, the supported K band combinations and the MSD improvement capability of the N band combinations, instead of reporting the MSD improvement capability of the K band combinations. In this reporting manner, repeated reporting of the MSD improvement capability of the band combination including some same bands in the K band combinations can be avoided, to reduce signaling overheads for reporting the MSD capability by the terminal device, and reduce memory overheads for storing capability information by the terminal device and the network device.

Optionally, the first capability enquiry information includes a filter condition used for enquiring the MSD improvement capability, and the filter condition includes one or more of the following: a first band, a first MSD source, a first power value, or a first MSD threshold. The first band indicates the terminal device to report an MSD improvement capability of the first band; the first MSD source indicates the terminal device to report an MSD improvement capability for a first MSD type and/or a first MSD order; the first power value indicates the terminal device to report an MSD improvement capability at the first power value; and the first MSD threshold indicates the terminal device to report an MSD improvement capability with an MSD improvement value less than or equal to the first MSD threshold.

In comparison with that the terminal device (for example, the UE) reports, to the network device based on the first capability enquiry information, MSD capabilities for improving MSD of all band combinations, and the terminal device reports, to the network device for each band combination, MSD improvement capabilities for all MSD types and MSD orders, in this application, the network device uses the first capability enquiry information including the filter condition, so that the terminal device reports, based on the filter condition in a targeted manner, the MSD improvement capability of the band combination including the first band, the MSD improvement capability of the first MSD source, the MSD improvement capability at the first power value, or the MSD improvement capability with the MSD improvement value less than or equal to the first MSD threshold, to reduce the signaling overheads for reporting the MSD improvement capability by the terminal device.

Optionally, the first capability information includes third indication information, and the third indication information indicates that an MSD improvement value of any MSD source of a first band combination is less than or equal to a first threshold, or indicates that the first band combination does not have the MSD improvement capability, where the first band combination is any one of the K band combinations or the N band combinations.

In this application, the terminal device reports, to the network device by using the third indication information, that the MSD improvement value of any MSD source of the first band combination is less than or equal to the first threshold, or the terminal device does not support the MSD improvement capability, and does not need to report detailed information of the MSD improvement capability of the first band combination, to reduce the signaling overheads for reporting the MSD improvement capability by the terminal device.

Optionally, an MSD improvement capability of each of the N band combinations includes one or more of the following: a first victim band, a first aggressor band, a second MSD source, a second power value, or a first MSD value.

The terminal device reports, to the network device, detailed information (for example, information such as the second MSD source and the first MSD value) of the MSD improvement capability of each of the N band combinations, to help the network device determine a proper band configuration policy and a proper scheduling policy based on the detailed information of the MSD improvement capability reported by the terminal device, to improve receiving performance of the terminal device.

Optionally, the first capability information further includes fourth indication information, and the fourth indication information indicates one or more of an MSD source, an aggressor band, or an MSD improvement value of one band in the N band combinations.

In comparison with a conventional technology in which the terminal device repeatedly reports an MSD improvement capability of some of the N band combinations, in this application, when the terminal device reports, based on the fourth indication information, the MSD improvement capability that is for one or more of the MSD source, the aggressor band, or the MSD improvement value when each of the N band combinations is used as a victim band, a case in which the MSD improvement capability of the band combination including some same bands in the K band combinations is repeatedly reported can be avoided, and the signaling overheads for reporting the MSD improvement capability by the terminal device are reduced.

According to a second aspect, a method for receiving capability information is provided. The method may be performed by a network device, or may be performed by a chip used in the network device. The following uses an example in which the method is performed by the network device for description. The method includes: sending first capability enquiry information to a terminal device; and receiving first capability information from the terminal device, where the first capability information indicates capability information of K band combinations supported by the terminal device and a maximum sensitivity degradation MSD improvement capability of the terminal device for N band combinations, the N band combinations are combinations of bands in the K band combinations, K is a positive integer, and N is a positive integer.

Because the terminal device reports the supported K band combinations in the first capability information, different band combinations in the K band combinations may include one or more same bands. For example, in the K band combinations, one band combination X1 includes a band A, a band B, and a band C (band A+band B+band C), and another band combination X2 includes the band A, the band B, and a band D (band A+band B+band D). Both the band combination X1 and the band combination X2 include the band A and the band B. If the terminal device supports an MSD improvement capability of a band combination (that is, band A+band B) including the band A and the band B, regardless of whether the band A and the band B are included in the band combination X1 or the band combination X2, the MSD improvement capability of (band A+band B) is the same, or MSD improvement values of (band A+band B) are within a same interval range. If the terminal device separately reports MSD improvement capabilities of the band combination X1 and the band combination X2, signaling overheads of the first capability information are increased. However, in this application, the terminal device separately sends the capability information of the K band combinations and information of the N band combinations with the MSD improvement capability as two pieces of independent information (for example, two independent fields) to the network device. Because the N band combinations are the combination of the bands (for example, band A+band B) in the K band combinations, and an MSD improvement capability of each of the N band combinations is only reported to the network device once, repeated reporting of an MSD improvement capability of a band combination including some same bands in the K band combinations is avoided, and the signaling overheads for reporting the MSD improvement capability by the terminal device are reduced.

Optionally, the first capability information includes first indication information and second indication information, the first indication information indicates the K band combinations supported by the terminal device, and the second indication information indicates the MSD improvement capability of the terminal device for the N band combinations. After receiving the first capability information from the terminal device, the method further includes: determining a target band combination based on the first indication information, where the target band combination is any one of the K band combinations; and determining an MSD improvement capability of the target band combination based on the second indication information.

After determining the target band combination, the network device determines the MSD improvement capability of the target band combination based on the MSD improvement capability of one or more of the N band combinations in the second indication information.

Optionally, the first capability enquiry information includes a filter condition used for enquiring the MSD improvement capability, and the filter condition includes one or more of the following: a first band, a first MSD source, a first power value, or a first MSD threshold. The first band indicates the terminal device to report an MSD improvement capability of the first band; the first MSD source indicates the terminal device to report an MSD improvement capability for a first MSD type and/or a first MSD order; the first power value indicates the terminal device to report an MSD improvement capability at the first power value; and the first MSD threshold indicates the terminal device to report an MSD improvement capability with an MSD improvement value less than or equal to the first MSD threshold.

In comparison with that the terminal device (for example, the UE) reports, to the network device based on the first capability enquiry information, MSD capabilities for improving MSD of all band combinations, and the terminal device reports, to the network device for each band combination, MSD improvement capabilities for all MSD types and MSD orders, in this application, the network device uses the first capability enquiry information including the filter condition, so that the terminal device reports, based on the filter condition in a targeted manner, the MSD improvement capability of the band combination including the first band, the MSD improvement capability of the first MSD source, the MSD improvement capability at the first power value, or the MSD improvement capability with the MSD improvement value less than or equal to the first MSD threshold, to reduce the signaling overheads for reporting the MSD improvement capability by the terminal device.

Optionally, the first capability information includes third indication information, and the third indication information indicates that an MSD improvement value of any MSD source of a first band combination is less than or equal to a first threshold, or indicates that the first band combination does not have the MSD improvement capability, where the first band combination is any one of the K band combinations or the N band combinations.

In this application, the terminal device needs to report detailed information of the MSD improvement capability to the network device. The terminal device in this application reports, to the network device by using the third indication information, that the MSD improvement value of any MSD source of the first band combination is less than or equal to the first threshold, or the terminal device does not support the MSD improvement capability, and does not need to report detailed information of the MSD improvement capability of the first band combination, to reduce the signaling overheads for reporting the MSD improvement capability by the terminal device, and improve efficiency of the network device in determining whether the terminal device supports the MSD improvement capability.

Optionally, an MSD improvement capability of each of the N band combinations includes one or more of the following: a first victim band, a first aggressor band, a second MSD source, a second power value, or a first MSD value.

The terminal device reports, to the network device, detailed information (for example, detailed information such as the second MSD source and the first MSD value) of the MSD improvement capability of each of the N band combinations, to help the network device determine a proper band configuration policy and a proper scheduling policy based on the detailed information of the MSD improvement capability reported by the terminal device, to improve receiving performance of the terminal device.

Optionally, the first capability information further includes fourth indication information, and the fourth indication information indicates one or more of an MSD source, an aggressor band, or an MSD improvement value of one band in the N band combinations.

In comparison with a conventional technology in which the terminal device repeatedly reports an MSD improvement capability of some of the N band combinations, in this application, when the terminal device reports, based on the fourth indication information, the MSD improvement capability that is for one or more of the MSD source, the aggressor band, or the MSD improvement value when each of the N band combinations is used as a victim band, a case in which the MSD improvement capability of the band combination including some same bands in the K band combinations is repeatedly reported can be avoided, and the signaling overheads for reporting the MSD improvement capability by the terminal device are reduced.

According to a third aspect, a method for reporting capability information is provided. The method may be performed by a terminal device, or may be performed by a chip used in the terminal device. The following uses an example in which the method is performed by the terminal device for description. The method includes: receiving configuration information from a network device, where the configuration information indicates a configuration parameter of a first carrier group and indicates the terminal device to send a maximum sensitivity degradation MSD improvement capability of the first carrier group, the first carrier group is a part of M carrier groups, the M carrier groups are M carrier groups supported by the terminal device, and M is a positive integer; and sending first information to the network device based on the configuration information, where the first information includes the MSD improvement capability of the terminal device for the first carrier group.

In comparison with a case in which the terminal device reports, in the capability information, MSD improvement capabilities supported by all band combinations to the network device, in this application, the terminal device reports, based on the first carrier group configured by the network device and a request for enquiring the MSD improvement capability of the first carrier group by the network device, the MSD improvement capability of the first carrier group in a targeted manner, to effectively reduce signaling overheads for reporting the MSD improvement capability. In addition, after receiving the configuration information of the first carrier group, the terminal device may obtain information such as a frequency domain configuration of a carrier and a bandwidth configuration of a carrier. Therefore, the terminal device may more accurately report the MSD improvement capability of the first carrier group based on the information such as a frequency-domain position and a bandwidth size of the carrier, so that the network device can better schedule the first carrier group.

Optionally, before receiving the configuration information from the network device, the method further includes:
receiving second capability enquiry information sent by the network device; and reporting second capability information to the network device, where the second capability information includes capability information of the M carrier groups supported by the terminal device.

In this embodiment, the terminal device reports the capability information of the supported M carrier groups to the network device based on the second enquiry information, so that the network device performs frequency domain configuration and bandwidth configuration on the M carrier groups.

Optionally, the configuration information further includes fifth indication information, and the fifth indication information indicates the terminal device to report the MSD improvement capability for one or more of the following: a second band, a third MSD source, a third power value, or a second MSD threshold. The second band indicates the terminal device to report an MSD improvement capability of the second band; the third MSD source indicates the terminal device to report an MSD improvement capability for a third MSD type and/or a third MSD order; the third power value indicates the terminal device to report an MSD improvement capability at the third power value; and the second MSD threshold indicates the terminal device to report an MSD improvement capability with an MSD improvement value less than or equal to the second MSD threshold.

The network device may request, by using the fifth indication information, the terminal device to report, in a targeted manner, the MSD improvement capability of the second band, the MSD improvement capability of the third MSD source, or the MSD improvement capability at the third power value, or the MSD improvement capability with the MSD improvement value less than or equal to the second MSD threshold, to reduce the signaling overheads for reporting the MSD improvement capability by the terminal device.

Optionally, the configuration information is carried in an RRC reconfiguration message or an RRC resume message.

In this embodiment, the terminal device obtains the configuration information based on the RRC reconfiguration message or the RRC resume message, and more accurately reports the MSD improvement capability based on the information such as the frequency domain configuration of the carrier and the bandwidth configuration of the carrier in the configuration information.

Optionally, the first information is carried in a radio resource control RRC reconfiguration complete message or an RRC resume complete message.

In this embodiment, the terminal device may report, based on the RRC reconfiguration message (that is, the configuration message used for RRC connection configuration) sent by the network device, the MSD improvement capability of the first carrier group to the network device in the RRC reconfiguration complete message or the RRC resume complete message. Before scheduling the first carrier group for data transmission, the network device reports the MSD improvement capability of the terminal device to the network device, to assist the network device in properly scheduling the first carrier group for uplink and downlink transmission, and improve performance of an entire wireless communication system.

Optionally, the second capability information further indicates that the terminal device has the MSD improvement capability.

The terminal device reports, to the network device by using the second capability information, an MSD improvement capability supported at per terminal device level, or an MSD improvement capability supported at per band combination level, or an MSD improvement capability supported at per band level, so that when configuring the first carrier group for the terminal device, the network device accurately requests the terminal device having the MSD improvement capability to report the MSD improvement capability, or requests the first carrier group in the band combination supporting the MSD improvement capability to report the MSD improvement capability, or requests the first carrier group including carriers at a band supporting the MSD improvement capability to report the MSD improvement capability, to avoid extra resource overheads generated when the network device blindly sends an enquiry for the MSD improvement capability to a terminal device that does not support the MSD improvement capability.

Optionally, the MSD improvement capability of the first carrier group includes one or more of the following: a second victim carrier, a second aggressor carrier, a fourth MSD source, a fourth power value, or a second MSD value.

The terminal device reports, to the network device, detailed information of the MSD improvement capability of the first carrier group, for example, information such as the second victim carrier, the second aggressor carrier, the fourth MSD source, the fourth power value, or the second MSD value, to help the network device determine a proper band configuration policy and a proper scheduling policy based on the detailed information.

Optionally, the configuration information includes frequency domain configuration information of a carrier and bandwidth configuration information of a carrier in the first carrier group.

The terminal device accurately reports the MSD improvement capability of the first carrier group based on the configuration information of the first carrier group (for example, the frequency domain configuration information of the carrier and the bandwidth configuration information of the carrier), so that the network device better schedules the first carrier group, to improve resource utilization.

According to a fourth aspect, a method for receiving capability information is provided. This application provides a communication method. The method may be performed by a network device, or may be performed by a chip used in the network device. The following uses an example in which the method is performed by the network device for description. The method includes: sending configuration information to a terminal device, where the configuration information indicates a configuration parameter of a first carrier group and indicates the terminal device to send a maximum sensitivity degradation MSD improvement capability of the first carrier group, the first carrier group is a part of M carrier groups, the M carrier groups are M carrier groups supported by the terminal device, and M is a positive integer; and receiving first information sent by the terminal device, where the first information includes the MSD improvement capability of the terminal device for the first carrier group.

In comparison with a case in which the terminal device reports, in the capability information, MSD improvement capabilities supported by all band combinations to the network device, in this application, the terminal device reports, based on the first carrier group configured by the network device and a request for enquiring the MSD improvement capability of the first carrier group by the network device, the MSD improvement capability of the first carrier group in a targeted manner, to effectively reduce signaling overheads for reporting the MSD improvement capability. In addition, after receiving the configuration information of the first carrier group, the terminal device may obtain information such as a frequency domain configuration of a carrier and a bandwidth configuration of a carrier. Therefore, the terminal device may more accurately report the MSD improvement capability of the first carrier group based on the information such as a frequency-domain position and a bandwidth size of the carrier, so that the network device can better schedule the first carrier group.

Optionally, before sending the configuration information to the terminal device, the method further includes:
sending second capability enquiry information to the terminal device; and receiving second capability information reported by the terminal device, where the second capability information includes capability information of the M carrier groups supported by the terminal device.

In this embodiment, the network device receives the capability information of the supported M carrier groups reported by the terminal device, so that the network device performs frequency domain configuration and bandwidth configuration on the M carrier groups.

Optionally, the configuration information further includes fifth indication information, and the fifth indication information indicates the terminal device to report the MSD improvement capability for one or more of the following: a second band, a third MSD source, a third power value, or a second MSD threshold. The second band indicates the terminal device to report an MSD improvement capability of the second band; the third MSD source indicates the terminal device to report an MSD improvement capability for a third MSD type and/or a third MSD order; the third power value indicates the terminal device to report an MSD improvement capability at the third power value; and the second MSD threshold indicates the terminal device to report an MSD improvement capability with an MSD improvement value less than or equal to the second MSD threshold.

In this embodiment, the network device may request, by using the fifth indication information, the terminal device to report, in a targeted manner, the MSD improvement capability of the second band, the MSD improvement capability of the third MSD source, or the MSD improvement capability at the third power value, or the MSD improvement capability with the MSD improvement value less than or equal to the second MSD threshold, to reduce the signaling overheads for reporting the MSD improvement capability by the terminal device.

Optionally, the configuration information is carried in an RRC reconfiguration message or an RRC resume message.

In this embodiment, the terminal device obtains the configuration information based on the RRC reconfiguration message or the RRC resume message, and more accurately reports the MSD improvement capability based on the information such as the frequency domain configuration of the carrier and the bandwidth configuration of the carrier in the configuration information.

Optionally, the first information is carried in a radio resource control RRC reconfiguration complete message or an RRC resume complete message.

In this embodiment, the terminal device may report, based on the RRC reconfiguration message (that is, the configuration message used for RRC connection configuration) sent by the network device, the MSD improvement capability of the first carrier group to the network device in the RRC reconfiguration complete message or the RRC resume complete message. Before scheduling the first carrier group for data transmission, the network device reports the MSD improvement capability of the terminal device to the network device, to assist the network device in properly scheduling the first carrier group for uplink and downlink transmission, and improve performance of an entire wireless communication system.

Optionally, the second capability information further indicates that the terminal device has the MSD improvement capability.

The network device receives, by using the second capability information, an MSD improvement capability supported at per terminal device level and reported by the terminal device, or an MSD improvement capability supported at per band combination level, or an MSD improvement capability supported at per band level, so that when configuring the first carrier group for the terminal device, the network device accurately requests the terminal device having the MSD improvement capability to report the MSD improvement capability, or requests the first carrier group in the band combination supporting the MSD improvement capability to report the MSD improvement capability, or requests the first carrier group including carriers at a band supporting the MSD improvement capability to report the MSD improvement capability, to avoid extra resource overheads generated when the network device blindly sends an enquiry for the MSD improvement capability to a terminal device that does not support the MSD improvement capability.

Optionally, the MSD improvement capability of the first carrier group includes one or more of the following: a second victim carrier, a second aggressor carrier, a fourth MSD source, a fourth power value, or a second MSD value.

The network device receives detailed information of the MSD improvement capability of the first carrier group reported by the terminal device, for example, information such as the second victim carrier, the second aggressor carrier, the fourth MSD source, the fourth power value, or the second MSD value, to help the network device determine a proper band configuration policy and a proper scheduling policy based on the detailed information.

Optionally, the configuration information includes frequency domain configuration information of a carrier and bandwidth configuration information of a carrier in the first carrier group.

The terminal device accurately reports the MSD improvement capability of the first carrier group based on the configuration information of the first carrier group (for example, the frequency domain configuration information of the carrier and the bandwidth configuration information of the carrier), so that the network device better schedules the first carrier group, to improve resource utilization.

According to a fifth aspect, a communication apparatus is provided. For beneficial effects, refer to descriptions in the first aspect. Details are not described herein again. The communication apparatus has a function of implementing the behavior in the method instance according to the first aspect. The function may be implemented by hardware, or may be implemented by hardware executing corresponding software. The hardware or the software includes one or more modules corresponding to the foregoing function. In a possible design, the communication apparatus includes: a first receiving module, configured to receive first capability enquiry information from a network device; and a first sending module, configured to report first capability information to the network device. These modules may perform corresponding functions in the method example according to the first aspect. For details, refer to detailed descriptions in the method example. Details are not described herein again.

According to a sixth aspect, a communication apparatus is provided. For beneficial effects, refer to descriptions in the second aspect. Details are not described herein again. The communication apparatus has a function of implementing the behavior in the method instance according to the second aspect. The function may be implemented by hardware, or may be implemented by hardware executing corresponding software. The hardware or the software includes one or more modules corresponding to the foregoing function. The communication apparatus includes: a second sending module, configured to send first capability enquiry information to a terminal device; and a second receiving module, configured to receive first capability information from the terminal device, where the first capability information indicates capability information of K band combinations supported by the terminal device and an MSD improvement capability of the terminal device for N band combinations, the N band combinations are combinations of bands in the K band combinations, K is a positive integer, and N is a positive integer. These modules may perform corresponding functions in the method example according to the second aspect. For details, refer to detailed descriptions in the method example. Details are not described herein again.

According to a seventh aspect, a communication apparatus is provided. For beneficial effects, refer to descriptions in the third aspect. Details are not described herein again. The communication apparatus has a function of implementing the behavior in the method instance according to the third aspect. The function may be implemented by hardware, or may be implemented by hardware executing corresponding software. The hardware or the software includes one or more modules corresponding to the foregoing function. In a possible design, the communication apparatus includes a third receiving module, configured to receive configuration information from a network device, where the configuration information indicates a configuration parameter of a first carrier group and indicates a terminal device to send a maximum sensitivity degradation MSD improvement capability of the first carrier group, the first carrier group is a part of M carrier groups, the M carrier groups are M carrier groups supported by the terminal device, and M is a positive integer; and a third sending module, configured to send first information to the network device based on the configuration information, where the first information includes the MSD improvement capability of the terminal device for the first carrier group. These modules may perform corresponding functions in the method example according to the third aspect. For details, refer to detailed descriptions in the method example. Details are not described herein again.

According to an eighth aspect, a communication apparatus is provided. For beneficial effects, refer to descriptions in the fourth aspect. Details are not described herein again. The communication apparatus has a function of implementing the behavior in the method instance according to the fourth aspect. The function may be implemented by hardware, or may be implemented by hardware executing corresponding software. The hardware or the software includes one or more modules corresponding to the foregoing function. The communication apparatus includes: a fourth sending module, configured to send configuration information to a terminal device, where the configuration information indicates a configuration parameter of a first carrier group and indicates the terminal device to send a maximum sensitivity degradation MSD improvement capability of the first carrier group, the first carrier group is a part of M carrier groups, the M carrier groups are M carrier groups supported by the terminal device, and M is a positive integer; and a fourth receiving module, configured to receive first information from the terminal device, where the first information includes the MSD improvement capability of the terminal device for the first carrier group. These modules may perform corresponding functions in the method example according to the fourth aspect. For details, refer to detailed descriptions in the method example. Details are not described herein again.

According to a ninth aspect, a communication apparatus is provided. The communication apparatus may be the terminal device in the foregoing method embodiment, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiment.

According to a tenth aspect, a communication apparatus is provided. The communication apparatus may be the network device in the foregoing method embodiment, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiment.

According to an eleventh aspect, a computer program product is provided. The computer program product includes computer program code. When the computer program code is run, the method performed by the terminal device in the foregoing aspects is performed.

According to a twelfth aspect, a computer program product is provided. The computer program product includes computer program code. When the computer program code is run, the method performed by the network device in the foregoing aspects is performed.

According to a thirteenth aspect, this application provides a chip system. The chip system includes a processor, configured to implement a function of the terminal device in the methods in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor, configured to implement a function of the network device in the methods in the foregoing aspects. In a possible design, the chip system further includes a memory, configured to store program instructions and/or data. The chip system may include a chip, or may include a chip and another discrete component.

According to a fifteenth aspect, this application provides a computer-readable storage medium. The computer-readable storage medium stores a computer program. When the computer program is run, the method performed by the terminal device in the foregoing aspects is implemented.

According to a sixteenth aspect, this application provides a computer-readable storage medium. The computer-readable storage medium stores a computer program. When the computer program is run, the method performed by the network device in the foregoing aspects is implemented.

### BRIEF DESCRIPTION OF DRAWINGS

FIG. 1 is a diagram of a structure of a wireless communication system 100 according to an embodiment of this application;
FIG. 2a is a diagram of a 5G system architecture according to an embodiment of this application;
FIG. 2b is a diagram of an application scenario according to an embodiment of this application;
FIG. 2c is a diagram of another application scenario according to an embodiment of this application;
FIG. 2d is a diagram of a structure of a cell application scenario according to an embodiment of this application;
FIG. 3 is a diagram of MSD of second-order harmonic interference according to an embodiment of this application;
FIG. 4 is a diagram of a method for reporting capability information according to an embodiment of this application;
FIG. 5 is a diagram of another method for reporting capability information according to an embodiment of this application;
FIG. 6 is a diagram of a structure of a communication apparatus according to an embodiment of this application;
FIG. 7 is a diagram of a structure of another communication apparatus according to an embodiment of this application;
FIG. 8 is a diagram of a structure of still another communication apparatus according to an embodiment of this application;
FIG. 9 is a diagram of a structure of yet another communication apparatus according to an embodiment of this application; and
FIG. 10 is a diagram of a structure of still another communication apparatus according to an embodiment of this application.

### DESCRIPTION OF EMBODIMENTS

The following describes technical solutions of embodiments in this application with reference to accompanying drawings.

Before a method for reporting capability information provided in this application is described, an application scenario, a wireless communication system, a network device, a terminal device, and the like to which this application is applicable are first briefly described.

The technical solutions provided in this application may be applied to various communication systems, for example, a 5th generation (5th Generation, 5G) or new radio (New Radio, NR) system, a long term evolution (Long Term Evolution, LTE) system, an LTE frequency division duplex (Frequency Division Duplex, FDD) system, an LTE time division duplex (Time Division Duplex, TDD) system, or the like. The technical solutions provided in this application may be further applied to a future communication system, for example, a 6th generation mobile communication system. The technical solutions provided in this application may be further applied to an open access network (open RAN, O-RAN or ORAN), and a cloud radio access network (cloud radio access network, CRAN). The technical solutions provided in this application may be further applied to device-to-device (Device-to-Device, D2D) communication, vehicle-to-everything (Vehicle-to-everything, V2X) communication, machine-to-machine (Machine-to-Machine, M2M) communication, machine-type communication (Machine-Type Communication, MTC), an internet of things (Internet of Things, IoT) communication system, or another communication system. In an example, V2X may include vehicle-to-vehicle (Vehicle-to-Vehicle, V2V), vehicle-to-pedestrian (Vehicle-to-Pedestrian, V2P), and vehicle-to-infrastructure (Vehicle-to-Infrastructure, V2I). The infrastructure is, for example, a roadside unit (Roadside Unit, RSU) or a network device. The technical solutions provided in this application may be further applied to a communication system in which two or more systems are integrated.

The technical solutions provided in this application are applicable to but are not limited to the following fields: MBMS, SC-PTM, multicast broadcast service, multicast broadcast single frequency network (Multicast Broadcast Single Frequency Network, MBSFN), dual-channel intelligent unicast (Dual-channel intelligent unicast, DC-IU), broadcast, multicast, multicast broadcast (Multicast Broadcast), groupcast, V2X, public safety (public safety), mission critical (mission critical), transparent IPv4/IPv6 multicast delivery (transparent IPv4/IPv6 multicast delivery), IPTV, software delivery over wireless (software delivery over wireless), group communication (group communication), internet of things (Internet of Things, IoT), television video (TV Video), television (TV), linear television (linear TV), live (Live), radio services (radio services), device to device (Device to Device, D2D), unmanned driving (unmanned driving), automated driving (automated driving, ADS), assisted driving (driver assistance, ADAS), intelligent driving (intelligent driving), connected driving (connected driving), intelligent network driving (intelligent network driving), car sharing (car sharing), and the like.

A terminal device in embodiments of this application includes various devices having a wireless communication function, and the terminal device may be configured to be connected to a person, an object, a machine, and the like. The terminal device may be widely used in various scenarios, for example, cellular communication, D2D, V2X, peer to peer (Peer to Peer, P2P), M2M, MTC, IoT, virtual reality (Virtual Reality, VR), augmented reality (Augmented Reality, AR), industrial control, autonomous driving, telemedicine, a smart grid, smart furniture, a smart office, a smart wearable, smart transportation, a smart city, an uncrewed aerial vehicle, a robot, remote sensing, passive sensing, positioning, navigation and tracking, autonomous delivery, and the like. The terminal device may be a terminal in any one of the foregoing scenarios, for example, an MTC terminal, an IoT terminal, or the like. The terminal device may be, in a 3rd generation partnership project (3rd Generation Partnership Project, 3GPP) standard, a user equipment (user equipment, UE), a terminal (terminal), a fixed device, a mobile station (mobile station) device or a mobile device, a subscriber unit (subscriber unit), a hand-held device, an in-vehicle device, a wearable device, a cellular phone (cellular phone), a smartphone (smartphone), a SIP phone, a wireless data card, a personal digital assistant (Personal Digital Assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (Global Positioning System, GPS) device, a target tracking device, an aircraft (for example, an uncrewed aerial vehicle, a helicopter, a multi-helicopter, a four-helicopter, an airplane, or the like), a ship, a remote control device, a smart home device, or an industrial device; may be an apparatus built in the foregoing device (for example, a communication module, a modem, a chip, or the like in the foregoing device); or may be another processing device connected to the wireless modem. For ease of description, an example in which the terminal device is a terminal or a UE is used below for description.

It should be understood that, in some scenarios, the UE may be further used as a base station. For example, the UE may act as a scheduling entity that provides a sidelink signal between UEs in a scenario like V2X, D2D, or P2P.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be mounted in the terminal device. In embodiments of this application, the chip system may include a chip, or may include a chip and another discrete component.

The network device in embodiments of this application may be a device configured to communicate with the terminal device. The network device may alternatively be referred to as an access network device, a radio access network device, or a core network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next-generation NodeB (next-generation NodeB, gNB), a relay station, an access point, a transmission point (Transmitting and Receiving Point, TRP), a transmission point (Transmission Point, TP), a primary station, a secondary station, a motor slide retainer (Motor Slide Retainer, MSR) node, a home base station, a network controller, an access node, a wireless node, an access point (AP), a transmission node, a transceiver node, a baseband unit (BBU), a remote radio unit (Remote Radio Unit, RRU), an active antenna unit (Active Antenna Unit, AAU), a remote radio head (Remote Radio Head, RRH), a central unit (Central Unit, CU), a distributed unit (Distributed Unit, DU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that functions as a base station in D2D, V2X, and M2M communication, a network side device in a 6G network, a device that functions as a base station in a future communication system, a core network device, or the like. The base station may support networks of a same access technology or different access technologies. A specific technology and a specific device form used for the network device are not limited in embodiments of this application.

The base station may be fixed or mobile. For example, the aircraft may be configured as a mobile base station, and one or more cells may move based on a position of the mobile base station. In another example, the aircraft may be configured as a device for communicating with another base station.

The network device and the terminal device may be deployed on the land, including an indoor device, an outdoor device, a hand-held device, or an in-vehicle device; may be deployed on the water; or may be deployed on an airplane, a balloon, and a satellite in the air. A scenario in which the network device and the terminal device are located is not limited in embodiments of this application.

Optionally, a plurality of RAN nodes may coordinate to assist the terminal in implementing radio access, and different RAN nodes separately implement a part of functions of the base station. The network device in embodiments of this application may alternatively be a module or unit that completes a part of functions of the base station. For example, the RAN node may be a central unit (Central Unit, CU), a distributed unit (Distributed Unit, DU), a CU-control plane (Control Plane, CP), a CU-user plane (User Plane, UP), a radio unit (Radio Unit, RU), or the like. The CU and the DU may be separately arranged, or may be included in a same network element, for example, a baseband unit (Baseband Unit, BBU). The RU may be included in a radio frequency device or a radio frequency unit, for example, included in a remote radio unit (Remote Radio Unit, RRU), an active antenna processing unit (Active Antenna Unit, AAU), or a remote radio head (Remote Radio Head, RRH).

Optionally, the CU may decouple a user plane and a control plane, to form a CU-control plane (CU-Control Plane, CU-CP) and a CU-user plane (CU-User Plane, CU-UP), and the CU-CP and the CU-UP support flexible deployment.

In different systems, the CU (or the CU-CP and the CU-UP), the DU, or the RU may also have different names, but a person skilled in the art may understand meanings thereof. For example, in an ORAN system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

In embodiments of this application, the term "wireless communication" may alternatively be referred to as "communication" for short, and the term "communication" may alternatively be described as "data transmission", "information transmission", or "transmission".

It should be further understood that, in this application, the "terminal device" is alternatively referred to as a "terminal apparatus", a "terminal", or the like; the "network device" is alternatively referred to as a "network apparatus", a "network side", or the like; and the "core network device" is alternatively referred to as a "core network apparatus", a "core network", or the like. It should be understood that, this application may be further applied to 6G. The network device may be a core network device that functions as a base station in a future communication system. In this application, the "network device" may alternatively be referred to as a "core network device", a "core network apparatus", a "core network", or the like.

First, a network architecture applicable to this application is briefly described.

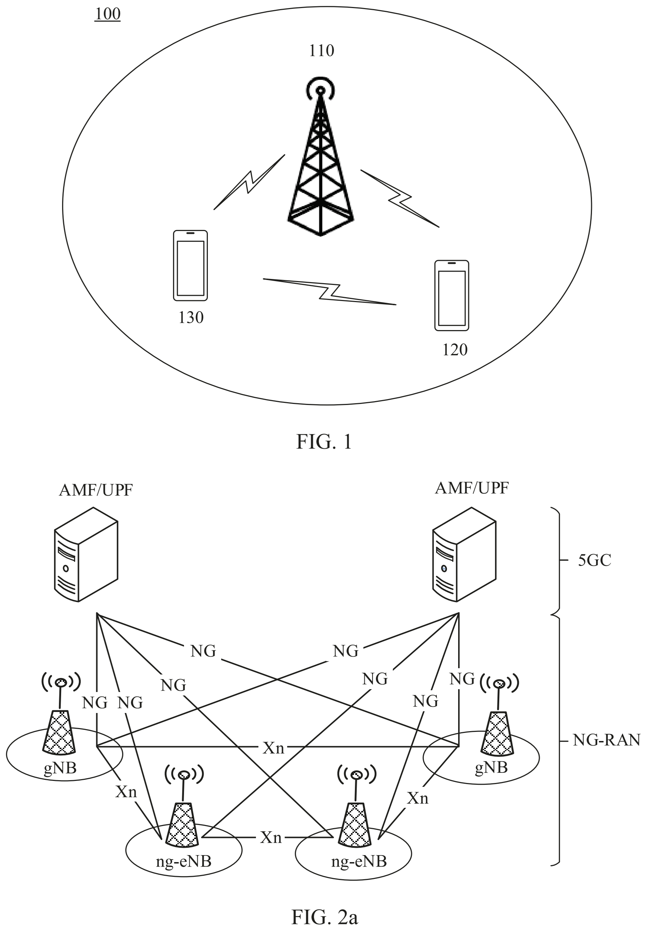

FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal device 120 and the terminal device 130 may directly communicate with each other, or may communicate with each other via the network device 110.

When the network device communicates with the terminal device, the network device may manage one or more cells, and there may be one or more terminal devices in one cell. Optionally, the network device and the terminal device form a single-cell communication system. Without loss of generality, the cell is referred to as a cell #1. The network device 110 in FIG. 1 may be a network device in the cell #1, or the network device 110 may serve a terminal device (for example, the terminal device 120) in the cell #1.

It should be noted that, the cell may be understood as an area within coverage of a radio signal of the network device.

This application may be further applied to a dual connectivity (dual connectivity, DC) scenario, including but not limited to: an evolved universal terrestrial radio access network (Evolved Universal Terrestrial Radio Access Network, EUTRAN)-NR dual connectivity (EUTRAN-NR Dual Connectivity, EN-DC) scenario and an NR-NR dual connectivity (NR-NR Dual Connectivity, NR-DC or NR-NR-DC) scenario.

The following describes a diagram of a communication scenario applicable to an embodiment of this application. As shown in FIG. 2a, the scenario is a diagram of a 5G system architecture. As shown in FIG. 2a, a RAN in 5G may be referred to as a next generation RAN (next generation RAN, NG-RAN). The NG-RAN includes two types: a gNB and a next generation eNB (next generation eNB, NG-eNB) based on LTE. The two types of access network devices both may be connected to a 5G core network (5G core, 5GC). The 5GC includes a plurality of network elements, including but not limited to: an access and mobility management function (Access and Mobility management Function, AMF) and a user plane function (User Plane Function, UPF). In addition, access network devices may communicate with each other through an Xn interface, and an access network device may communicate with a 5G core network through an NG interface. For details about a related architecture, refer to a protocol definition.

This application may be further applied to a carrier aggregation (carrier aggregation, CA) scenario. In the CA scenario, a plurality of cell groups may serve a terminal device. In other words, a plurality of component carriers (Component Carriers, CCs) may be aggregated together to improve a technology of a peak rate of the terminal and a system capacity, to meet an increasingly high network rate requirement of the terminal. CA has two important concepts: a primary component carrier in a primary cell (Primary cell, PCell) and a secondary component carrier in a secondary cell (Secondary cell, SCell). After a radio resource control (Radio Resource Control, RRC) connection is established, the secondary cell may be configured to provide an extra radio resource for data transmission, to increase the system capacity.

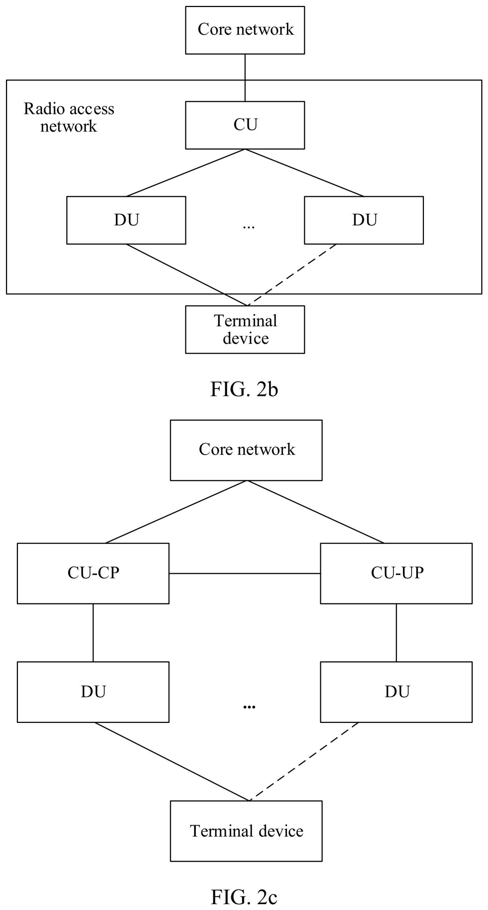

As shown in FIG. 2b, the scenario is a scenario in which a CU and a DU are separately deployed. In the scenario, a network device includes the CU and the DU. The CU is configured to communicate with a core network, and the DU is configured to communicate with a terminal device.

As shown in FIG. 2c, the scenario is a scenario in which a CU-CP, a CU-UP, and a DU are separately deployed. In the scenario, a network device includes the CU-CP, the CU-UP, and the DU. The CU-CP is configured to communicate with a control plane of a core network, the CU-UP is configured to communicate with a user plane of the core network, and the DU is configured to communicate with a terminal device.

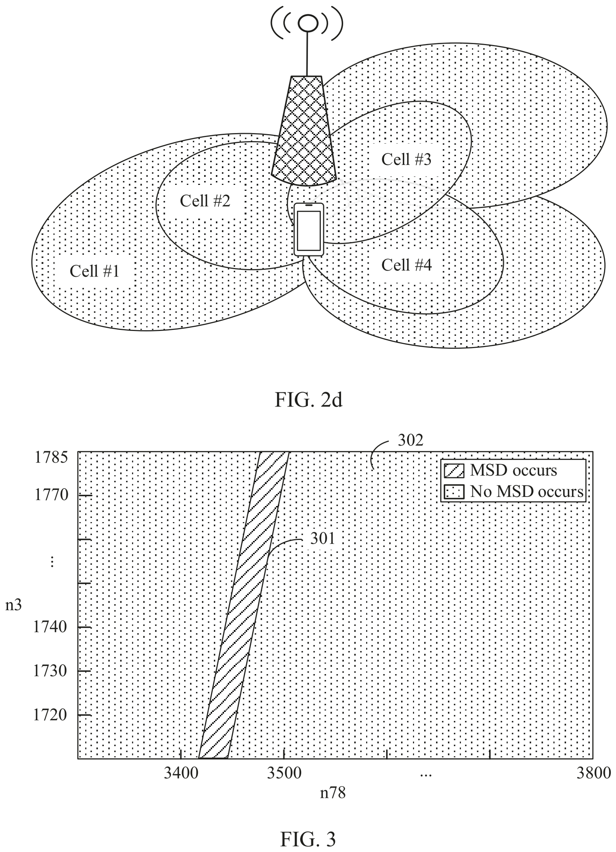

FIG. 2d is a diagram of a cell application scenario applicable to an embodiment of this application. As shown in FIG. 2d, a network device may manage a plurality of cells. A cell #1 is a primary cell of a terminal device, a cell #2, a cell #3, and a cell #4 are secondary cells of the terminal device, and CCs of the cell #1, the cell #2, the cell #3, and the cell #4 may jointly serve the terminal device by using the CA technology.

Content such as the communication system and the application scenario to which embodiments of this application are applicable are described above. The following describes terms in embodiments of this application by using an example in which a terminal device is a UE.

### (1) UE capability (UE Capability)

Because different UEs have different hardware structures or software versions, the different UEs have different UE capabilities. To better serve a UE, a network needs to know a UE capability of the UE, to configure a proper working mode for the UE. A 5G communication system is used as an example. In the 5G communication system, UE capabilities are classified into the following levels of capabilities.
(a) UE capability (alternatively referred to as per UE capability)
   The UE capability is applicable to all bands and band combinations supported by a UE.
(b) Band (band) capability (alternatively referred to as per band capability)
   The band capability indicates that different bands may have different capabilities, and the different capabilities include different values of a same capability. For example, a band n3 supports a UE capability X1, but a band n78 may not support the UE capability X1. Alternatively, a value of a UE capability X2 supported by a band n3 is A, and a value of the UE capability X2 supported by a band n78 is B.
(c) Band combination (Band Combination, BC) capability (alternatively referred to as per BC capability)

The band combination may alternatively be referred to as a frequency band combination. The BC capability indicates that different BCs may have different capabilities. For example, (band 2+band 3) supports a UE capability X2, but (band 3+band 78) may not support the UE capability X2.

The band combination includes one or more bands, where a capability of a band in a band combination is a capability of each band in each band combination (perBCperband), or is referred to as a feature set of each band (FeatureSetPerBand). One band in a band combination may include one or more carriers, where a capability of each carrier is a capability of each carrier in each band combination (perBCperCC), or is referred to as a feature set of each carrier (FeatureSetPerCC).

### (2) Carrier aggregation technology

In an existing communication technology, the carrier aggregation technology is a common means of increasing a communication bandwidth. The carrier aggregation technology indicates that a plurality of carriers simultaneously serve a terminal device, and a plurality of component carriers (component carriers, CCs) are aggregated to increase a communication bandwidth and a peak rate. Each carrier may have at least one CC in a serving cell working for the terminal device. In the existing carrier aggregation technology, usually, one carrier is a primary cell (PCell: primary cell), and another serving cell is a secondary cell (SCell: secondary cell). The secondary cell may be activated or deactivated during use. If there is no data transmission for a period of time, a network device may deactivate the secondary cell, and when data is sent subsequently, may consider activating the secondary cell. In a dual connectivity (dual connectivity, DC) technology, a terminal device is connected to both a master node (master node, MN) and a secondary node (secondary node, SN). A group of serving cells associated with the MN is referred to as a master cell group (Master Cell Group, MCG), and a group of serving cells associated with the SN is referred to as a secondary cell group (Secondary Cell Group, SCG). A serving cell in each cell group may also work through carrier aggregation.

Carrier aggregation includes aggregation of a plurality of carriers at a single band, and also includes aggregation of a plurality of carriers at a plurality of bands.

### (3) Maximum sensitivity degradation MSD

Receiver sensitivity is used for describing a minimum signal received power at which a terminal device receives a downlink wanted signal. When signal energy received by the terminal device is less than nominal receiver sensitivity, the terminal device cannot receive data. In other words, the receiver sensitivity is a minimum threshold at which the terminal device can receive a signal.

However, during actual signal transmission, the receiver sensitivity of the terminal device degrades (that is, maximum sensitivity degradation) due to interference. Consequently, receiving performance of the terminal device is affected. Based on different interference causes, causes of MSD include but are not limited to: harmonic (harmonic) interference, harmonic mixing (harmonic mixing) interference, intermodulation interference (Intermodulation Distortion, IMD), cross band isolation (cross band isolation), and proximity (proximity) interference.

The harmonic interference indicates that a second, third, fourth, or fifth harmonic of an uplink sending signal in a lower band in a CA or DC band combination falls into a receive band of a higher band, causing interference to receiving in the higher band.

The harmonic mixing interference indicates that a second, third, fourth, or fifth harmonic of an uplink sending signal in a higher band in a CA or DC band combination mixed with a local oscillator signal in a lower band falls into a receive band of a lower band with a wanted signal, causing interference to receiving in the lower band.

The intermodulation interference indicates that a second-order, third-order, fourth-order, or fifth-order intermodulation product of two concurrent uplink bands in a dual-uplink band combination in a CA or DC band combination falls into a receive signal band of a downlink band (that is, a downlink receive band). Consequently, a downlink receive signal is interfered, and the MSD occurs on the UE. The downlink receive band may be one of downlink bands corresponding to the two uplink bands that generate intermodulation, or may be a downlink receive band of a third band other than the two concurrent uplink bands.

The cross band isolation indicates that when a band used by a UE to send an uplink signal is close to a band used to receive a downlink signal, or when an uplink signal at a band in a band combination is interfered from an uplink to a downlink due to insufficient suppression by a filter on a frequency range of a received signal in another band, the MSD occurs on the UE.

The proximity interference indicates interference of an uplink signal in a same band to a signal in a receive band.

Currently, in a 3rd generation partnership project (3rd Generation Partnership Project, 3GPP) standard, an MSD value of a band combination is specified under a specific assumption (for example, a specific uplink/downlink channel bandwidth). A band combination DC_3-n78 widely used in 5G NR is used as an example. The DC_3-n78 indicates that there is dual connectivity DC between a band 3 and a band n78. MSD values of the DC_3-n78 in different channel bandwidths are shown in Table 1. Channel bandwidths of a downlink band n78 (that is, n78 downlink channel bandwidth) all exceed 10 dB. When the n78 downlink channel bandwidth is 10 MHz, 15 MHz, or 20 MHz, the MSD value even exceeds 20 dB.

**Table 1**

| LTE band (uplink band 3) or NR band (downlink band n78)/downlink band channel bandwidth affected by MSD | | | | | | | | | | | | |
|---|---|---|---|---|---|---|---|---|---|---|---|---|
| n78 downlink channel bandwidth (unit: MHz) | 5 | 10 | 15 | 20 | 25 | 30 | 40 | 50 | 60 | 80 | 90 | 100 |
| MSD value (unit: dB) | | **23.9** | **22.1** | **20.9** | | | 17.9 | 16.8 | 16.0 | 14.8 | 14.3 | 13.8 |

In addition, when frequency-domain positions of uplink and downlink carriers are different, MSD values are also different. As shown in FIG. 3, an uplink frequency range of a band n3 is 1710 MHz to 1785 MHz, and a downlink frequency range of a band n78 is 3300 MHz to 3800 MHz. Assuming that a fixed channel bandwidth of n3 is 10 MHz and a fixed channel bandwidth of n78 is 20 MHz, when frequency positions of carriers configured by the network device at the band n3 and the band n78 are within a range shown in 301, signal sending of an uplink carrier at the band n3 causes second-order harmonic interference to signal receiving of a downlink carrier at the band n78. In other words, the MSD occurs on the UE within the range shown in 301. Within a range shown in 302, signal sending of an uplink carrier at the band n3 does not cause interference to signal receiving of a downlink carrier at the band n78. In other words, the MSD does not occur on the UE within the range shown in 302.

When the MSD occurs on the UE, the UE cannot receive any data. Consequently, the receiving performance of the UE is affected. Therefore, the MSD needs to be improved to improve the receiving performance of the UE.

Currently, the MSD can be improved on both a network side and a terminal side. For example, the MSD on the terminal side is improved mainly by improving hardware of the UE. For example, the MSD is improved by improving printed circuit board (Printed Circuit Board, PCB) isolation of the UE, improving antenna isolation of the UE, improving performance of a radio frequency device (for example, linearity of a power amplifier (Power Amplifier, PA)), and the like. The MSD on the network side is improved mainly by proper carrier configuration and scheduling to avoid the MSD on the UE. For example, to avoid harmonic/harmonic mixing interference between two bands, the network device may avoid simultaneously scheduling uplink sending and downlink receiving of the UE. In other words, the UE does not simultaneously perform uplink transmission and downlink transmission, to reduce impact on receiver sensitivity of the UE (that is, avoid the MSD on the UE). For another example, to avoid intermodulation interference caused by simultaneous sending of two bands to downlink receiving, the network device may avoid scheduling simultaneous uplink sending. For example, at a same moment, the network device sends an uplink signal on one uplink carrier, and does not send an uplink signal on another carrier, to avoid intermodulation interference and improve the MSD of the UE.

However, UEs produced by different manufacturers have different UE capabilities, where some UEs support MSD improvement, while some others do not. In addition, different UEs can perform MSD improvement for different band combinations, different types, and different values. In this case, if the network device does not know the MSD improvement capability supported by the UE, the network device may perform MSD improvement by blindly suppressing spectrum configuration and scheduling. Consequently, deployment and utilization of a part of a spectrum by the network device are affected, and operator revenues are further affected. It can be learned that, the UE needs to report the MSD improvement capability of the UE to the network device, so that the network device can use a proper spectrum configuration and scheduling policy to improve the MSD of the UE, to improve receiving performance of the UE.

The UE reports, based on the UE capability enquiry information sent by the network device, the UE capability (for example, the band combination supported by the UE and the MSD improvement capability supported by the UE) of the UE in the UE capability information. However, when the UE reports the MSD improvement capability of the supported band combination, signaling overheads for the MSD improvement capability may be excessively large. For example, in two band combinations, one band combination 1 is (band 1+band 2+band 3), and the other band combination 2 is (band 1+band 2+band 4). Because both the band combination 1 and the band combination 2 include the band 1 and the band 2, if the terminal device supports an MSD improvement capability of (band 1+band 2), regardless of whether the band 1 and the band 2 are included in the band combination 1 or the band combination 2, the MSD improvement capability of (band 1+band 2) is the same, or MSD improvement values of (band 1+band 2) are within a same interval range. If the terminal device separately reports the MSD improvement capability of (band 1+band 2) once in the band combination 1 and the band combination 2, signaling overheads of the UE capability information are increased. Therefore, an embodiment of this application provides a method for reporting capability information, to reduce signaling overheads for reporting an MSD improvement capability by a terminal device.

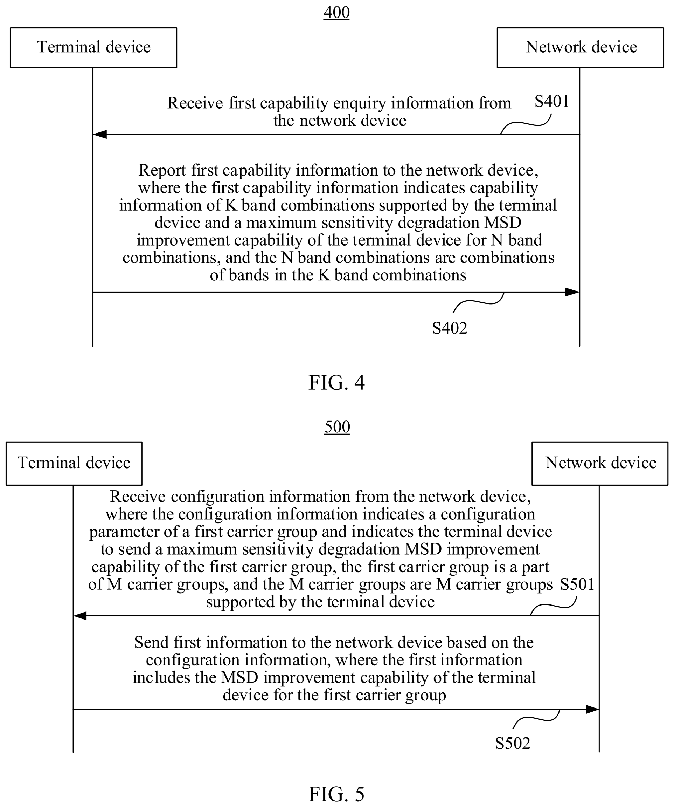

The following specifically describes a method 400 for reporting capability information with reference to FIG. 4. The method 400 includes the following steps.

S401: A network device sends first capability enquiry information to a terminal device. Correspondingly, the terminal device receives the first capability enquiry information from the network device.

The first capability enquiry information is used for enquiring a radio access capability (for example, a band combination supported by the terminal device) of the terminal device.

For example, the network device is a base station, and the terminal device is a UE. For example, the first capability enquiry information is a UE capability enquiry message (UE Capability Enquiry).

In an embodiment, the first capability enquiry information does not carry a filter condition. After receiving the first capability enquiry information that is sent by the network device and that does not carry the filter condition, the terminal device reports, to the network device by using the first capability information, a band, a band combination, and an MSD improvement capability that are supported by the terminal device.

The MSD improvement capability may alternatively be understood as a capability for optimizing the MSD or a capability for suppressing the MSD.

In another embodiment, the first capability enquiry information includes a filter condition used for enquiring the MSD improvement capability, and the filter condition includes one or more of the following: a first band, a first MSD source, a first power value, or a first MSD threshold.

For example, the network device uses one bit (bit) in the first capability enquiry information, and the bit indicates whether the terminal device needs to report the MSD improvement capability based on the filter condition. For example, when the bit is 1, it indicates that the terminal device needs to report the MSD improvement capability based on the filter condition; or when the bit is 0, or the first capability enquiry information does not carry the bit, it indicates that the terminal device does not need to report the MSD improvement capability based on the filter condition.

In the foregoing filter condition, the first band indicates the terminal device to report an MSD improvement capability of the first band; the first MSD source indicates the terminal device to report an MSD improvement capability for a first MSD type and/or a first MSD order, where the first MSD source includes the first MSD type and/or the first MSD order, the first MSD type indicates the terminal device to report the MSD improvement capability for the first MSD type, and the first MSD order indicates the terminal device to report the MSD improvement capability for the first MSD order; the first power value may indicate the terminal device to report an MSD improvement capability at the first power value; and the first MSD threshold indicates the terminal device to report an MSD improvement capability with an MSD improvement value less than or equal to the first MSD threshold.

Optionally, the filter condition of the MSD improvement capability includes the first band, indicating the terminal device to report an MSD improvement capability when the first band is used as a victim band (victim band), or indicating the terminal device to report an MSD improvement capability when the first band is used as an aggressor band (aggressor band). The aggressor band may alternatively be understood as a band in which an aggressor is located. The terminal device (for example, the UE) reports an MSD improvement capability of a first band enquired by the network device, and the terminal device does not report an MSD improvement capability of a first band that is not enquired by the network device. Even if the terminal device supports the MSD improvement capability of the first band that is not enquired by the network device, the terminal device does not need to report the MSD improvement capability of the first band to the network device.

In a possible implementation, the network device may indicate the first band by using a band filter list used for filtering an MSD improvement capability in the first capability enquiry information. It should be understood that, the first band may be one or more bands.

In another possible implementation, one piece of indication information S1 is added to each band in a band filter list (FrequencyBandListFilter) that is defined in the protocol and that is used for filtering a band combination reported by the terminal device. The indication information S1 indicates whether the terminal device reports an MSD improvement capability of a corresponding band. For example, the indication information S1 is one bit. When the bit is 1, it indicates that the indication information S1 exists; or when the bit is 0, it indicates that the indication information S1 does not exist. A band in which the indication information S1 exists is the first band. Alternatively, when the bit is 1, it indicates that the terminal device needs to report an MSD improvement capability of a corresponding band (that is, the first band); or when the bit is 0, it indicates that the terminal device does not need to report an MSD improvement capability of a corresponding band. Alternatively, a possible specific implementation of the indication information S1 may be an enumerated value represented as true. For example, true indicates that the indication information exists.

It should be understood that, a method for reporting the MSD improvement capability by the terminal device when the first band is used as the aggressor band is similar to a method for reporting the MSD improvement capability by the terminal device when the first band is used as the victim band. Details are not described herein again.

Optionally, the filter condition of the MSD improvement capability includes the first MSD source, indicating the terminal device to report the MSD improvement capability for the first MSD type and/or the first MSD order. The first MSD source may alternatively be understood as a cause of the MSD, including the first MSD type and/or the first MSD order. The first MSD type includes one or more of harmonic interference, harmonic mixing interference, intermodulation interference, cross band isolation, and proximity interference. The first MSD order may alternatively be understood as an interference order, including one or more of a second order, a third order, a fourth order, and a fifth order. For details, refer to the foregoing descriptions. Details are not described herein again.

That the first MSD source includes the first MSD type and/or the first MSD order indicates that the first MSD source includes the first MSD type, or the first MSD source includes the first MSD order, or the first MSD source includes the first MSD type and the first MSD order. For example, the first MSD source is second-order (that is, the first MSD order) intermodulation interference (that is, the first MSD type) or fourth-order (that is, the first MSD order) harmonic interference (that is, the first MSD type).

It should be understood that, in this application, the MSD caused by another interference cause other than the foregoing interference causes is not excluded as the first MSD source, and an MSD of another order is not excluded as the first MSD source.

In a possible implementation, the first MSD source is indicated in the first capability enquiry information by using indication information used for filtering the first MSD source.

Optionally, the filter condition of the MSD improvement capability may further include a filter condition for a band combination C1, indicating the terminal device to report an MSD improvement capability of the band combination C1. In a possible implementation, the network device may indicate the band combination C1 in the first capability enquiry information by using indication information that is of the band combination and that is used for filtering the MSD improvement capability. It should be understood that, the band combination C1 may include one or more band combinations. For example, the band combination C1 is (band A+band B).

Optionally, the filter condition of the MSD improvement capability may further include the first power value, indicating the terminal device to report the MSD improvement capability in a case in which an uplink transmit power is the first power value. The first power value may be an absolute power value, with a unit of dB, or may be a power class (power class). The first power value may alternatively be a power range, indicating the terminal device to report the MSD improvement capability of the uplink transmit power within the power range. In a possible implementation, the first power value is indicated in the first capability enquiry information by using indication information of one or more bits.

Optionally, the filter condition of the MSD improvement capability may further include the first MSD threshold, indicating the terminal device to report the MSD improvement capability with the MSD improvement value less than or equal to the first MSD threshold. In a possible implementation, the first MSD threshold is indicated in the first capability enquiry information by using indication information that is of the first MSD threshold and that is used for filtering the MSD improvement capability. For example, the first MSD threshold is D, an MSD improvement value of a band combination X1 supported by the UE is D1 (less than D), an MSD improvement value of a band F1 supported by the UE is D2 (less than D), and an MSD improvement value of a band combination X2 supported by the UE is D3 (greater than D). The UE reports, to the network device, the MSD improvement capability with the MSD improvement value less than or equal to the first MSD threshold. In other words, the UE reports an MSD improvement capability of the band combination X1 and an MSD improvement capability of the band F1, but does not report an MSD improvement capability of the band combination X2.

Optionally, the filter condition of the MSD improvement capability may further include more of the first band, the first MSD source, the first power value, or the first MSD threshold. For example, the filter condition may include the first band and the first MSD source, indicating the terminal device (for example, the UE) to report the MSD improvement capability from the first MSD source at the first band. For example, if the first band is a band A, the first MSD source is second-order harmonic interference, and the UE supports an MSD improvement capability for improving second-order harmonic interference when the band A is used as a victim band in a band combination (band A+band D), the UE reports the MSD improvement capability of the band A for the second-order harmonic interference. If the UE further supports an MSD improvement capability for improving second-order harmonic interference when a band B is used as a victim band in a band combination (band B+band D), but the network device does not enquire an MSD improvement capability of the band B as the victim band, the terminal device does not report the MSD improvement capability of the band B. If the UE further supports an MSD improvement capability for improving intermodulation interference when a band A is used as a victim band in a band combination (band A+band D), but the network device does not enquire an MSD improvement capability of the intermodulation interference as the first MSD source, the terminal device does not report the MSD improvement capability of the band A as the victim band for improving the intermodulation interference.

It should be understood that, the filter condition of the MSD improvement capability sent by the network device by using the first capability enquiry information may indicate an MSD improvement capability that the network device is interested in or that the network device wants to enquire, and does not constitute a limitation that the terminal device needs to report an MSD improvement capability enquired by the network device. When the terminal device does not support the MSD improvement capability enquired by the network device, the terminal device does not report a corresponding MSD improvement capability, or the terminal device indicates that the terminal device does not support a corresponding MSD improvement capability. For example, the network device enquires an MSD improvement capability of a band A, but the terminal device does not support the MSD improvement capability of the band A. In this case, the terminal device does not report the MSD improvement capability of the band A, or the terminal device implicitly indicates, by not reporting the MSD improvement capability of the band A, that the terminal device does not support the MSD improvement capability of the band A.

In this embodiment, the terminal device (for example, the UE) reports, to the network device based on the first capability enquiry information, MSD capabilities for improving MSD of all band combinations, and the terminal device reports, to the network device for each band combination, MSD improvement capabilities for all MSD types and MSD orders. In this application, the network device uses the first capability enquiry information including the filter condition, so that the terminal device may report, based on the filter condition in a targeted manner, the MSD improvement capability of the band combination including the first band, the MSD improvement capability of the first MSD source, the MSD improvement capability at the first power value, or the MSD improvement capability with the MSD improvement value less than or equal to the first MSD threshold, to reduce the signaling overheads for reporting the MSD improvement capability by the terminal device.

The first capability enquiry information and the first capability enquiry information including the filter condition are described in detail above. The following describes a specific case in which the terminal device reports the MSD improvement capability by using the first capability information.

S402: The terminal device reports first capability information to the network device, and correspondingly, the network device receives the first capability information from the terminal device, where the first capability information indicates capability information of K band combinations supported by the terminal device and an MSD improvement capability of the terminal device for N band combinations, the N band combinations are combinations of bands in the K band combinations, K is a positive integer, and N is a positive integer.

The terminal device sends the first capability information to the network device in response to the first capability enquiry information sent by the network device. For example, the first capability information is UE capability information (UE Capability Information).

The terminal device reports the first capability information to the network device, where the first capability information indicates the capability information of the K band combinations supported by the terminal device and the MSD improvement capability of the terminal device for the N band combinations, and the N band combinations are the combination of the bands in the K band combinations.

The K band combinations indicate band combinations for carrier aggregation or dual connectivity supported by the terminal device. For example, the K band combinations are reported to the network device by using a supported band combination list (Supported Bandcombination List).

The N band combinations are the combination of the bands in which the terminal device (for example, the UE) supports the MSD improvement capability. In a possible implementation, each of the N band combinations includes an aggressor band and a victim band. For example, a band combination 1 in the N band combinations includes two bands, where one band is an aggressor band, and the other band is a victim band. For example, the aggressor band in the band combination 1 causes harmonic interference to the victim band, and the harmonic interference causes the MSD. The terminal device supports an MSD improvement capability of the band combination 1 for the harmonic interference.

For another example, a band combination 2 in the N band combinations includes three bands, where two bands are aggressor bands, and a third band is a victim band. For example, uplink sending in the two bands in the band combination 2 causes intermodulation interference to receiving at the third band, and the intermodulation interference causes the MSD. The terminal device supports an MSD improvement capability of the band combination 2 for the intermodulation interference.

Optionally, each of the N band combinations is a band combination that is defined in the 3GPP protocol and has the MSD.

The N band combinations are the combination of the bands in the K band combinations. It may be understood that, each of the N band combinations is a band combination in carrier aggregation or dual connectivity supported by the terminal device. For example, each of the N band combinations is one band combination in the K band combinations, or is a subset of one band combination in the K band combinations. For example, if the terminal device supports K=2 band combinations, namely, (band A+band B+band C) and (band A+band B+band D), the N band combinations may be one of the two band combinations, or a part of one of the two band combinations, for example, (band A+band B), (band B+band D), or (band A+band C), but not (band C+band D). Because the terminal device does not support carrier aggregation or dual connectivity transmission in the band combination (band C+band D), the K band combinations do not include the band combination (band C+band D).

In an embodiment, the first capability enquiry information does not include the filter condition, and the terminal device reports, to the network device by using the first capability information based on the first capability enquiry information, the supported K band combinations and the MSD improvement capability of the N band combinations. For example, the terminal device reports, to the network device, that K=3 supported band combinations are respectively (band A+band B+band C), (band E+band F+band G), and (band A+band C+band D+band E), and reports that the supported N band combinations with the MSD improvement capability are respectively (band A+band B) and (band B+band C). The network device determines an MSD improvement capability of the band combination (band A+band B+band C) based on both an MSD improvement capability of (band A+band B) and an MSD improvement capability of (band B+band C) in the N band combinations. The network device determines an MSD improvement capability of the band combination (band A+band C+band D+band E) based on (band A+band C) in the N band combinations. The network device determines, by traversing the N band combinations, that the band combination (band E+band F+band G) does not support an MSD improvement capability.

In another embodiment, the first capability enquiry information includes the foregoing filter condition. In a reporting manner, the terminal device reports, to the network device by using the first capability information based on the first capability enquiry information, the K band combinations and the MSD improvement capability of the N band combinations that meet the foregoing filter condition. In another manner, the terminal device reports the MSD improvement capability in the K band combinations by using the first capability information. For example, the first capability enquiry information includes a filter condition for a target band (for example, a band A) as a victim band, and the terminal device reports, based on the filter condition, an MSD improvement capability of each of the K band combinations including the target band as the victim band. For example, the filter condition indicates that the target band to be enquired by the network device is a band A, and the band A is a victim band. The terminal device selects, from the K band combinations, a band combination including the band A as the victim band and having an MSD improvement capability. If the terminal device supports an MSD improvement capability of a band combination (band A+band B+band C) including the band A as the victim band in the K band combinations, the terminal device reports the MSD improvement capability of the band combination (band A+band B+band C).

It can be learned that, in this application, the terminal device sends the capability information of the K band combinations and information of the N band combinations with the MSD improvement capability as two pieces of independent information (for example, two independent fields) to the network device. Because the N band combinations are the combination of the bands (for example, band A+band B) in the K band combinations, and an MSD improvement capability of each of the N band combinations is only reported to the network device once, repeated reporting of the MSD improvement capability of a band combination including some same bands in the K band combinations is avoided, and the signaling overheads for reporting the MSD improvement capability by the terminal device are reduced.

In an embodiment, the N band combinations are a subset of the K band combinations, and an MSD improvement capability of each of the N band combinations is included in capability information of the band combination, for example, included in a per BC capability corresponding to the band combination or a feature set combination (Feature Set Combination) corresponding to the band combination. In this case, the N band combinations do not need to be indicated by independent indication information, and the N band combinations may be understood as a logical band combination that is formed for representing a combination of an aggressor band and a victim band of the MSD. The network device determines, based on the capability information of the K band combinations, a target band combination for which carrier aggregation or dual connectivity is configured and an MSD improvement capability of the target band combination.

For example, the first capability enquiry information does not include the foregoing filter condition, and the terminal device reports the first capability information to the network device based on the first capability enquiry information. The terminal device reports the K band combinations by using indication information Y in the first capability information, and reports information such as a victim band and an MSD value in the K band combinations. In other words, the terminal device reports the MSD improvement capability of the K band combinations by using the same indication information. For example, the terminal device reports, by using the indication information Y, MSD improvement capabilities of K=2 band combinations, where the K=2 band combinations are respectively (band A+band B+band C) and (band A+band D+band F). If the terminal device supports an MSD improvement capability of (band A+band B+band C) with the band A as a victim band, the terminal device reports, by using the indication information Y, the MSD improvement capability of (band A+band B+band C) with the band A as the victim band. If the terminal device supports an MSD improvement capability of (band A+band D+band F) with the band A as a victim band and a band B as an aggressor band, the terminal device reports, by using the indication information Y, the MSD improvement capability of (band A+band D+band F) with the band A as the victim band and the band B as the aggressor band. In other words, the terminal device reports, by using the indication information Y, the MSD improvement capability of (band A+band B) (that is, one of the N band combinations) in (band A+band D+band F), where (band A+band B) is a subset of the K=2 band combinations.

In an embodiment, the first capability information includes first indication information and second indication information, the first indication information indicates the K band combinations supported by the terminal device, and the second indication information indicates the MSD improvement capability of the terminal device for the N band combinations. After the network device receives the first capability information from the terminal device, the method further includes: determining, by the network device, a target band combination based on the first indication information, where the target band combination is any one of the K band combinations; and determining, by the network device, an MSD improvement capability of the target band combination based on the second indication information.

After receiving the first capability enquiry information, the terminal device reports the supported K band combinations by using the first indication information in the first capability information, and reports the MSD improvement capability of the N band combinations by using the second indication information. The first capability enquiry information may include a filter condition, or may not include a filter condition.

Optionally, the first indication information may be sent to the network device in a form of a first band combination list. For example, the first band combination list is a supported band combination list (supportedBandCombinationList) or a supported band combination list-uplink transmit switch (supportedBandCombinationList-UplinkTxSwitch) that is reported in the first capability information by using a radio frequency parameter (RF-parameter) capability. The second indication information may be sent to the network device in a form of a second band combination list.

For example, the first capability enquiry information does not include a filter condition, and a manner of reporting the first capability information by the terminal device based on the first capability enquiry information is shown in Table 2. The first capability information includes the first indication information and the second indication information. For the first indication information, a band combination supported by the terminal device (for example, the UE) is reported in a form of a first band combination list by using a field 1, and for the second indication information, a band combination with an MSD improvement capability supported by the terminal device (for example, the UE) is reported in a form of a second band combination list by using a field 2. After the network device receives the first capability information sent by the terminal device, the network device parses the first capability information, to obtain the first band combination list in the field 1 and the second band combination list in the field 2. The network device may determine an MSD improvement capability of a band combination (for example, the target band combination) in the first band combination list based on an MSD improvement capability of a band combination in the second band combination list.

Certainly, the terminal device may further report the MSD improvement capability based on the first capability enquiry information including the filter condition. For example, the terminal device reports, based on the filter condition, a first band combination list and a second band combination list that meet the filter condition. For example, the filter condition is second-order harmonic interference (that is, an MSD source), and the first capability information reported by the terminal device includes the first band combination list (that is, the K band combinations) and the second band combination list that meets the filter condition, where each band combination in the second band combination list that meets the filter condition supports an MSD improvement capability for the second-order harmonic interference.

After the network device receives the first band combination list and the second band combination list, the network device determines a target band combination based on the first band combination list. For example, the target band combination is (band A+band B+band C), that is, the network device needs to determine an MSD improvement capability of (band A+band B+band C). The network device determines the MSD improvement capability of the target band combination based on the second band combination list in the field 2. For example, if the second band combination list includes a band combination (band A+band B) and a band combination (band A+band C), the network device determines the MSD improvement capability of (band A+band B+band C) (that is, the target band combination) by using both (band A+band B) and (band A+band C) in the second band combination list.

For another example, the network device determines an MSD improvement capability of each band combination in the first band combination list based on the second band combination list reported by the terminal device. If the network device does not find the target band combination (for example, band A+band B+band C) and a subset of the target band combination (for example, (band A+band B), (band B+band C), and (band A+band C) are subsets of (band A+band B+band C)) in the second band combination list, the network device determines that the target band combination does not support MSD improvement. The foregoing subset band combination may alternatively be understood as that the target band combination is used as a fallback band combination (fallback BC) of a parent band combination (parent BC).

**Table 2**

| First capability information | Indication form | Indication field | Band combination |
|---|---|---|---|
| First indication information | First band combination list | Field 1 | Band A+band B+band C |
| | | | Band A+band B+band D |
| | | | Band A+band E+band F |
| Second indication information | Second band combination list | Field 2 | Band A+band B |
| | | | Band A+band C |
| | | | Band A+band D |

For another example, the target band combination is (band 1+band 2+band 3), and the second band combination list includes a band combination (band 1+band 2), where an MSD improvement value of (band 1+band 2) for second-order harmonic interference as an MSD source is X dB. The network device determines that an MSD improvement value of the target band combination (band 1+band 2+band 3) for the second-order harmonic interference is X dB.

In an optional implementation, the network device may determine the MSD improvement capability of the target band combination in the first band combination list based on a plurality of band combinations in the second band combination list.

The terminal device reports the K band combinations and the MSD improvement capability of the N band combinations by using the first indication information and the second indication information respectively. In other words, the first indication information and the second indication information are respectively reported by using different fields, and are not reported by using a same field. In this embodiment, the terminal device reports, to the network device by using an independent field, the second band list indicated by the second indication information, instead of directly reporting the MSD improvement capability of the N band combinations in the first band combination list indicated by the first indication information. This reporting manner still complies with a reporting principle for a fallback band combination predetermined in the protocol. To be specific, the terminal device does not need to repeatedly report an MSD improvement capability of a lower-order band combination when an MSD improvement capability of a fallback band combination (for example, band 1+band 2) and an MSD improvement capability of a parent band combination (for example, band 1+band 2+band 3+band 4) supported by the terminal device are the same. In this reporting manner, repeated reporting of an MSD improvement capability of a band combination including some same bands in the K band combinations can be avoided, to reduce the signaling overheads for reporting the MSD improvement capability by the terminal device and memory overheads for storing the MSD improvement capability.

In an embodiment, an MSD improvement capability of each of the N band combinations reported by the terminal device includes one or more of the following: a first victim band, a first aggressor band, a second MSD source, a second power value, or a first MSD value.

For descriptions of the first victim band, the first aggressor band, and the second MSD source including a second MSD type and/or a second MSD order, refer to related descriptions of the victim band, the aggressor band, the first MSD source, the second MSD type, and/or the second MSD order in the foregoing method 400. Details are not described herein again.

The second power value indicates an MSD improvement capability of the terminal device in a case in which a transmit power is the second power value. The second power value may be an absolute power value, or may be a power class (power class), or a power range.

The first MSD value indicates an MSD improvement value of the terminal device, and may be an absolute value for MSD improvement, for example, 5 dB or 10 dB; or may be an MSD improvement threshold, or may be an interval range of an MSD improvement value. The MSD improvement threshold or the interval range may be predefined in the protocol, or may be configured by a network. For example, an interval range for MSD improvement by the terminal device predefined in the protocol is as follows: [0, N1), [N1, N2), [N2, N3), and [N3, N4], where N1 reported by the terminal device (for example, the UE) indicates that an MSD improvement value supported by the terminal device is in [0, N1), and similarly, N2 reported by the terminal device indicates that an MSD improvement value supported by the terminal device is in [N1, N2), and so on. The terminal device reports one of four thresholds (N1, N2, N3, N4), and the four thresholds may be represented by using two binary digits. For example, 00 represents N1, 01 represents N2, 10 represents N3, and 11 represents N4.

In a possible implementation, the first MSD value may be associated with the first victim band, the first aggressor band, the second MSD source, and the second power value. When the victim band and the aggressor band are the same but MSD sources or power values are different, associated MSD values may also be different.

For example, for a band combination including two bands in the N band combinations, for example, (band A+band B), if the band A is a victim band and the band B is an aggressor band, when reporting an MSD improvement capability of (band A+band B), the terminal device only needs to indicate one of a first victim band or a first aggressor band. In a possible implementation, a band identifier of the victim band or the aggressor band is explicitly indicated. In another possible implementation, the terminal device indicates a first MSD value for the band A, but does not indicate the first MSD value for the band B, to implicitly indicate that the band A is the first victim band (or the first aggressor band) and the band B is the first aggressor band (or the first victim band). The network device may infer, based on the first MSD value indicated by the band A, that the band A is the first victim band (or the first aggressor band).

For another example, for a band combination including three bands in the N band combinations, for example, (band A+band B+band C), when reporting that simultaneous sending in two bands (for example, band B+band C) causes MSD improvement to a third band (for example, a band A), the terminal device may indicate only a first victim band (that is, the band A), and the other two bands (band B+band C) are first aggressor bands. When reporting the MSD improvement capability of (band A+band B+band C), the terminal device indicates the first MSD value for the band A, but does not indicate the first MSD value for (band B+band C). The network device determines, based on the first MSD value indicated by the band A, that the band A is the first victim band, and the band B and the band C are the first aggressor bands.

For example, as shown in Table 3, when reporting the MSD improvement capability of each of the N band combinations, the terminal device reports one or more of the first victim band, the first aggressor band, the second MSD source, the second power value, or the first MSD value. For example, when reporting the MSD improvement capability of (band A+band D) in the N band combinations, the terminal device further reports that the MSD improvement capability of (band A+band D) is an MSD improvement capability for harmonic interference (that is, the second MSD type). For another example, when reporting the MSD improvement capability of (band C+band F) in the N band combinations, the terminal device further reports that the MSD improvement capability of (band C+band F) is an MSD improvement capability with an MSD improvement value (that is, the first MSD value) of 10 dB for the band A as the first victim band and third-order (that is, the second MSD order) intermodulation interference (that is, the second MSD type) as the second MSD source. For another example, when reporting the MSD improvement capability of (band C+band E) in the N band combinations, the terminal device further reports that an MSD improvement threshold (that is, the first MSD value) of (band C+band E) is 10 dB. Optionally, the terminal device may report that an interval range for MSD improvement of (band C+band E) is (0, 10 dB].

**Table 3**

| N band combinations | First victim band | First aggressor band | Second MSD type | Second MSD order | First MSD value |
|---|---|---|---|---|---|
| Band A+band B | Band A | / | / | / | / |
| Band A+band C | / | Band A | / | / | / |
| Band A+band D | / | / | Harmonic interference | / | / |
| Band A+band F | / | / | / | Second-order | / |
| Band C+band E | / | / | / | / | 10 dB |
| Band C+band F | Band C | / | Harmonic interference | Third-order | / |
| Band B+band D | / | Band A | / | / | 5 dB |
| Band A+band B+band D | Band A | Band B+band D | Intermodulation interference | Third-order | 7 dB |

The terminal device reports, to the network device, detailed information (for example, detailed information such as the second MSD source and the first MSD value) of the MSD improvement capability of each of the N band combinations, to help the network device determine a proper band configuration policy and a proper scheduling policy based on the detailed information of the MSD improvement capability reported by the terminal device, to improve receiving performance of the terminal device.

In an embodiment, the first capability information includes third indication information, and the third indication information indicates that an MSD improvement value of any MSD source of a first band combination is less than or equal to a first threshold, or indicates that the first band combination does not have the MSD improvement capability, where the first band combination is any one of the K band combinations or the N band combinations.

There are two cases in which the third indication information indicates that the MSD improvement value of any MSD source of the first band combination is less than or equal to the first threshold. Case 1: The third indication information indicates that the MSD improvement value of any MSD source of the first band combination is less than the first threshold. Case 2: The third indication information indicates that the MSD improvement value of any MSD source of the first band combination is less than or equal to the first threshold.

The MSD source indicated by the third indication information includes a fourth MSD type and/or a fourth MSD order. For details about the MSD source, the fourth MSD type, and/or the fourth MSD order indicated by the third indication information, refer to related descriptions of the first MSD source, the first MSD type, and/or the first MSD order in the foregoing method 400. Details are not described herein again.

After receiving the first capability enquiry information, the terminal device reports, in response to the first capability enquiry information, the K band combinations supported by the terminal device and the MSD improvement capability of the N band combinations. Optionally, the first capability enquiry information may be enquiry information including a filter condition.

If the MSD improvement value of any MSD source of the first band combination supported by the terminal device is less than or equal to the first threshold, the terminal device may perform indication by using the third indication information. For example, when reporting whether the first band combination supports the MSD improvement value of any MSD source to be less than or equal to the first threshold, the terminal device may indicate, by using the third indication information in the first capability information, whether the first band combination supports the MSD improvement value of any MSD source to be less than or equal to the first threshold. The third indication information may be indicated by one bit. For example, if the third indication information is 1, it indicates that the terminal device supports the MSD improvement value of any MSD source of the first band combination being less than or equal to the first threshold. If the third indication information is 0 or the first capability information does not carry the third indication information, it indicates that the terminal device does not support the MSD improvement value of any MSD source of the first band combination being less than or equal to the first threshold. In another implementation, the third indication information may be implicitly indicated depending on whether an information element for the MSD improvement capability of the first band combination is null. If the information element for the MSD improvement capability exists but is null (that is, a parent field indicating the MSD improvement capability exists, but includes no subfields such as a victim band, an aggressor band, an MSD source, and an MSD improvement value), it indicates that the first band combination supports the MSD improvement value of any MSD source to be less than or equal to the first threshold. In a possible implementation, if the information element for the MSD improvement capability of the first band combination does not exist (that is, a parent field indicating the MSD improvement capability is default), it indicates that the first band combination does not support the MSD improvement capability.

The first threshold may be a value preset in the protocol, or may be a value configured by a network. This is not limited in this application.

For example, the first threshold is 10 dB, the MSD source indicated by the third indication information includes but is not limited to second-order harmonic interference, third-order intermodulation interference, cross band isolation, and proximity interference, and the first band combination is a band combination (band A+band B+band C) in the K band combinations. If the MSD improvement value of any MSD source of the first band combination supported by the terminal device is 3 dB, when the terminal device reports an MSD improvement capability of (band A+band B+band C) to the network device, the terminal device only needs to explicitly or implicitly indicate the third indication information for (band A+band B+band C), and does not need to report specific information of the MSD improvement capability (for example, information such as an MSD source and an MSD improvement value) of the terminal device for (band A+band B+band C). In this way, signaling overheads for reporting the MSD improvement capability of the first band combination by the terminal device are reduced.

In an optional embodiment, when an MSD improvement value of some MSD sources supported by the first band combination is less than or equal to the MSD value preset in the protocol, the terminal device needs to report specific information of the MSD improvement capability when reporting the MSD improvement capability of the first band combination, for example, an MSD improvement capability of the first band combination for the MSD source and the MSD improvement value. A case in which the first band combination supports the MSD improvement value of some MSD sources being less than or equal to the MSD value preset in the protocol may be indicated by the indication information in the first capability information. A specific indication manner is not limited in this application, and may be designed based on an actual application scenario.

The MSD value preset in the protocol may be an MSD value for the first band combination preset in the protocol in a worst case, where the MSD value preset in the protocol is greater than the first threshold.

In another optional embodiment, when the MSD improvement value of some MSD sources supported by the first band combination of the terminal device is greater than the first threshold, and when the MSD improvement value of some MSD sources supported by the first band combination of the terminal device is less than or equal to the MSD value preset in the protocol, the terminal device also needs to report specific information of the MSD improvement capability when reporting the MSD improvement capability of the first band combination. A case in which the first band combination of the terminal device supports the MSD improvement value of some MSD sources being greater than the first threshold, and the first band combination of the terminal device supports the MSD improvement value of some MSD sources being less than or equal to the MSD value preset in the protocol may alternatively be indicated by the indication information in the first capability information. A specific indication manner is not limited in this application, and may be designed based on an actual application scenario.

Herein, an example in which the first band combination supports the MSD improvement value of some MSD sources being less than or equal to the MSD value preset in the protocol is used for description of a case in which the terminal device reports the MSD improvement capability of the first band combination for some MSD sources. If the first band combination of the terminal device supports the MSD improvement value of some MSD sources being greater than the first threshold, and the first band combination of the terminal device supports the MSD improvement value of some MSD sources being less than or equal to the MSD value preset in the protocol, for a case in which the terminal device reports the MSD improvement capability of the first band combination for some MSD types, refer to the case in which the first band combination supports the MSD improvement value of some MSD sources being less than or equal to the MSD value preset in the protocol. Details are not described herein again.

For example, the first threshold is 5 dB, the MSD value preset in the protocol is 10 dB, the filter condition included in the first capability enquiry information is a first band combination list, and band combinations in the first band combination list are (band A+band B+band C) and (band A+band B+band D). The terminal device (for example, the UE) needs to report an MSD improvement capability for the first band combination list. If the terminal device supports an MSD improvement value (for example, 4 dB) of any MSD source of (band A+band B+band C) (that is, the first band combination) being less than or equal to the first threshold (that is, 5 dB), when the terminal device reports an MSD improvement capability of (band A+band B+band C), the third indication information may be carried after (band A+band B+band C) and set to 1, and the terminal device does not need to report a specific MSD improvement capability. If the terminal device supports an MSD improvement value (for example, 7 dB) of some MSD sources of (band A+band B+band D) (that is, the first band combination) being less than or equal to the MSD value (for example, 10 dB) preset in the protocol, when reporting an MSD improvement capability of (band A+band B+band D), the terminal device needs to report a specific MSD improvement capability of (band A+band B+band C), for example, a victim band (for example, the band A), aggressor bands (for example, band B+band C), a MSD type (for example, intermodulation interference and harmonic interference), an MSD order (for example, third-order), and an MSD improvement value (for example, 7 dB) in (band A+band B+band C).

For another example, the terminal device may report the MSD improvement capability by using the first band combination list and the second band combination list. If the first capability enquiry information includes one or more of the first band, the first MSD source (for example, the first MSD type and/or the first MSD order), or the first MSD threshold, when generating the second band combination list, the terminal device generates, for only one or more of the first band, the first MSD source, or the first MSD threshold included in the filter condition, a band combination that meets the filter condition, and reports an MSD improvement capability of the band combination that meets the filter condition. That is, the second band combination list includes only band combinations that meet the filter condition. When reporting the MSD improvement capability in the second band combination list, the terminal device reports the second MSD source (for example, the second MSD type and/or the second MSD order), the first MSD value, the first victim band, the first aggressor band, or the like. Refer to Table 3.

In this embodiment, the terminal device needs to report detailed information of the MSD improvement capability to the network device. The terminal device in this application reports, to the network device by using the third indication information, that the MSD improvement value of any MSD source of the first band combination is less than or equal to the first threshold, or the terminal device does not support the MSD improvement capability, and does not need to report detailed information of the MSD improvement capability of the first band combination, to reduce the signaling overheads for reporting the MSD improvement capability by the terminal device.

In an embodiment, the first capability information further includes fourth indication information, and the fourth indication information indicates one or more of an MSD source, an aggressor band, or an MSD improvement value of one band in the N band combinations.

The terminal device indicates, by using the fourth indication information in the first capability information, an MSD improvement capability for one or more of an MSD source, an aggressor band, or an MSD improvement value in a case in which a single band in the N band combinations is used as a victim band. The MSD source (that is, an MSD source of a band) includes a fifth MSD type and/or a fifth MSD order. For related descriptions of the MSD source, the fifth MSD type, and/or the fifth MSD order, refer to the foregoing descriptions in the method 400. Details are not described herein again.

The terminal device reports the MSD improvement capability of the N band combinations based on the first capability enquiry information. The first capability enquiry information may be enquiry information including a filter condition, or may be enquiry information that does not include a filter condition.

For example, the first capability enquiry information does not include a filter condition, and the terminal device reports, based on the first capability enquiry information, the MSD improvement capability of the N band combinations in a manner in Table 4. As shown in Table 4, when the terminal device reports an MSD improvement capability of a single band in the N band combinations as a victim band, the terminal device reports an aggressor band corresponding to the single band as the victim band. For example, when a band A is a victim band, the terminal device reports an aggressor band of a band B corresponding to the band A as the victim band. The band A as the victim band can lower the MSD improvement value to 5 dB for second-order harmonic interference, that is, the terminal device supports an MSD improvement capability of (band A+band B) for the second-order harmonic interference, and lowers the MSD improvement value to 5 dB. For another example, when a band D is a victim band, the terminal device reports a band A and a band B (that is, band A+band B) corresponding to the band D as the victim band, and the band D as the victim band can lower the MSD improvement value to 7 dB for third-order intermodulation interference, that is, the terminal device supports an MSD improvement capability of (band A+band B+band D) for the third-order intermodulation interference, and lowers the MSD improvement value to 7 dB.

**Table 4**

| Victim band | Aggressor band | MSD type | MSD order | MSD improvement value | Band combination with MSD improvement capability |
|---|---|---|---|---|---|
| Band A | Band B | Harmonic interference | Second-order | 5 dB | Band A+band B |
| Band C | Band A | Proximity interference | Third-order | 8 dB | Band A+band C |
| Band A | Band D | Harmonic interference | Second-order | 10 dB | Band A+band D |
| Band D | Band A+band B | Intermodulation interference | Third-order | 7 dB | Band A+band B+band D |

For example, if the network device determines an MSD improvement capability of a band combination C11 (for example, band_1+band_2+band_3) and an MSD improvement capability of a band combination C12 (for example, band_1+band_2+band_3+band_4) in K=2 band combinations, the network device traverses MSD improvement capabilities of all bands (for example, the band_1, the band_2, the band_3, and the band_4) in the band combination C11 and the band combination C12. For example, the terminal device supports an MSD improvement capability of the band_1 as a victim band and the band_2 as an aggressor band (that is, supports an MSD improvement capability of (band_1+band_2)), and supports an MSD improvement capability of the band_2 as a victim band and the band_4 as an aggressor band (that is, supports an MSD improvement capability of (band_2+band_4)). The terminal device determines an MSD improvement capability of the band combination C11 based on the MSD improvement capability of (band_1+ band_2), and determines an MSD improvement capability of the band combination C12 based on the MSD improvement capability of (band_2+band_4).

Certainly, the terminal device may also report the MSD improvement capability of the N band combinations based on the first capability enquiry information including the filter condition. For example, as shown in Table 4, the filter condition indicates that the terminal device reports an MSD improvement capability of a band C as a victim band and second-order (that is, the MSD order) harmonic interference (that is, the MSD type) as an MSD source. When reporting the MSD improvement capability of the band C as the victim band, the terminal device indicates, by using the fourth indication information in the first capability information, an MSD improvement capability of a band A as an aggressor band and second-order harmonic interference as an MSD source, that is, the terminal device implicitly reports an MSD improvement capability of (band A+band C).

In this embodiment, the terminal device repeatedly reports an MSD improvement capability of some of the N band combinations. In this application, when the terminal device reports, based on the fourth indication information, the MSD improvement capability for one or more of the MSD source, the aggressor band, or the MSD improvement value in a case in which each of the N band combinations is used as the victim band, a case in which the MSD improvement capability of the band combination including some same bands in the K band combinations is repeatedly reported can be avoided, and the signaling overheads for reporting the MSD improvement capability by the terminal device are reduced.

After the terminal device sends the first capability information to the network device, the network device parses the first capability information, and determines the MSD improvement capability of each of the K band combinations based on the first capability information.

For example, the first capability information includes the first band combination list and the second band combination list, where the first band combination list includes the K band combinations, and the second band combination list includes the N band combinations. If the network device needs to determine the MSD improvement capability of each of the K band combinations, the network device may determine the MSD improvement capability of each of the K band combinations by enquiring an MSD improvement capability of each of the N band combinations. For details, refer to the foregoing embodiment.

For another example, after receiving the first capability information, the network device first enquires the first band combination list reported in the first capability information. If a band combination in the first band combination list carries indication information X, it indicates that the band combination in the first band combination list supports MSD improvement, and the network device searches the first capability information for the second band combination list. If the band combination in the first band combination list does not carry indication information X, it indicates that the band combination in the first band combination list does not support MSD improvement. In this case, the network device does not need to enquire the second band combination list, and determines MSD of each band combination in the first band combination list based on a worst case predefined in the protocol.

The foregoing describes a method for reporting capability information. The following describes another method 500 for reporting capability information with reference to FIG. 5.

The UE reports the UE capability of the UE in the UE capability information based on the UE capability enquiry information sent by the network device. However, when the UE reports, in the UE capability information, the supported MSD improvement capability, the following problem exists: The UE reports, to the network device, the MSD improvement capabilities of all band combinations supporting the MSD improvement capabilities, and when the terminal device supports a large quantity of band combinations supporting the MSD improvement capabilities, signaling overheads for reporting the MSD improvement capabilities of all the band combinations are large. Therefore, an embodiment of this application provides another method for reporting capability information, to reduce signaling overheads for reporting an MSD improvement capability by a terminal device.

FIG. 5 shows another method 500 for reporting capability information according to this application. The method 500 includes the following steps.

S501: A network device sends configuration information to a terminal device, and correspondingly, the terminal device receives the configuration information from the network device, where the configuration information indicates a configuration parameter of a first carrier group and indicates the terminal device to send a maximum sensitivity degradation MSD improvement capability of the first carrier group, the first carrier group is a part of M carrier groups, the M carrier groups are M carrier groups supported by the terminal device, and M is a positive integer. The network device obtains the M carrier groups supported by the terminal device by directly requesting the terminal device to report information of the M carrier groups or indirectly requesting another device (for example, a base station). For example, the another device may store the information of the M carrier groups supported by the terminal device. A manner in which the network device obtains the information of the M carrier groups is not limited in this application.

The configuration parameter of the first carrier group may be understood as configuration information, and may include parameter values having different values, or may include an enumerated value, for example, an enumerated value indicating true, used for indicating an enabling relationship. A specific indication manner is not limited in this application. For example, the configuration parameter of the first carrier group may be indicated by a cell group configuration CellGroupConfig information element.

The configuration information is carried in an RRC reconfiguration (RRC Reconfiguration) message or an RRC resume (RRC Resume) message. The network device sends the configuration information to the terminal device by using the RRC reconfiguration message or the RRC resume message, so that the terminal device may more accurately report the MSD improvement capability based on the information such as a frequency domain configuration of a carrier and a bandwidth configuration of a carrier in the configuration information.

The first carrier group may be a combination of carriers in carrier aggregation CA, dual connectivity (NG) EN-DC, NE-DC, NR-DC, or a supplementary uplink (Supplementary uplink, SUL). A carrier in the carrier group may be a TDD carrier or an FDD carrier, or may be an SUL carrier or an SDL supplementary uplink (Supplementary downlink, SDL) carrier.

One or more carriers included in the first carrier group may be carriers in a same cell group (cell group, CG), for example, carriers in a master cell group (MCG, master cell group) or carriers in a secondary cell group (SCG, secondary cell group), or may be carriers in different cell groups, that is, carrier groups across cell groups. For example, one carrier group includes carriers of an MCG and an SCG.

Optionally, bands corresponding to the carriers in the first carrier group are two or more bands, and the first carrier group is a carrier group in inter-band carrier aggregation (inter-band CA).

For example, the carriers in the first carrier group include carriers at a band 1 and a band 2. In an embodiment, the configuration information includes a frequency-domain position of a carrier and a channel bandwidth of a carrier in the first carrier group.

For example, the network device indicates, by using indication information S1 in the configuration information, the terminal device to report the MSD improvement capability of the first carrier group. For example, the indication information S1 may indicate, by using a one binary digit, whether the terminal device reports the MSD improvement capability of the first carrier group. When the indication information S1 is 1, it indicates that the terminal device needs to report the MSD improvement capability of the first carrier group. When the indication information S1 is 0 or the indication information S1 is not carried, it indicates that the terminal device does not need to report the MSD improvement capability of the first carrier group.

In an embodiment, the configuration information further includes fifth indication information, and the fifth indication information indicates the terminal device to report the MSD improvement capability for one or more of the following: a second band, a third source, a third power value, or a second MSD threshold.

The network device requests the terminal device to report the MSD improvement capability, and may indicate, by using the fifth indication information in the configuration information, the terminal device to report the MSD improvement capability for one or more of the following: the second band, the third MSD source, the third power value, or the second MSD threshold.

The second band indicates the terminal device to report an MSD improvement capability of the second band, and the fifth indication information indicates an identifier of the second band. The second band is a target carrier, and the fifth indication information indicates an identifier of the target carrier, that is, the second band indicates the terminal device to report an MSD improvement capability for the target carrier. The MSD improvement capability for the target carrier may be understood as an MSD improvement capability in a case in which the target carrier is used as a victim carrier. The second band is a target cell, and the fifth indication information indicates an identifier of the target cell, that is, the second band indicates the terminal device to report an MSD improvement capability for the target cell. The MSD improvement capability for the target cell may be understood as an MSD improvement capability in a case in which the target cell is used as a victim cell. The third MSD source indicates the terminal device to report an MSD improvement capability for a third MSD type and/or a third MSD order. The third power value indicates the terminal device to report an MSD improvement capability at the third power value. The second MSD threshold indicates the terminal device to report an MSD improvement capability with an MSD improvement value less than or equal to the second MSD threshold.

For example, if the fifth indication information indicates the second band, the terminal device needs to report the MSD improvement capability of the second band (that is, the target carrier) as the victim carrier, or may indicate the terminal device to report the MSD improvement capability of the second band (that is, the target carrier) as the aggressor carrier. The terminal device (for example, the UE) reports the MSD improvement capability based on the fifth indication information. For example, the terminal device reports the MSD improvement capability of the second band as the victim carrier.

For example, if the fifth indication information indicates the third power value, the terminal device needs to report the MSD improvement capability in a case in which an uplink transmit power is the third power value, and the third power value may be an absolute power value, a power class (power class), or a power range. In a possible implementation, the network device estimates, based on a measurement report reported by the terminal device, a path loss of the terminal device at a current position, to determine a possible uplink transmit power of the terminal device in a case in which an uplink signal sent by the terminal device can be correctly received. The network device enquires, of the terminal device, the MSD improvement capability at the uplink transmit power based on the estimated uplink transmit power. Because the MSD improvement capability of the terminal device varies at different power values, the terminal device may more accurately report the MSD improvement capability based on the third power value indicated by the fifth indication information.

For another example, the fifth indication information may indicate a plurality of the second band, the third MSD source, and the second MSD threshold. For example, the second band indicated by the fifth indication information is a carrier A, and the third MSD source is second-order harmonic interference. When the UE supports an MSD improvement capability of the carrier A for the second-order harmonic interference, the UE supports an MSD improvement capability of (carrier A+carrier D) for the second-order harmonic interference, and the UE supports an MSD improvement capability of a carrier C for third-order harmonic interference, the UE reports only the MSD improvement capability of the carrier A for the second-order harmonic interference based on the fifth indication information.

It should be noted that, for a manner in which the fifth indication information indicates the terminal device to report the MSD improvement capability for one or more of the following: the second band, the third MSD source, the third power value, or the second MSD threshold, refer to the manner in which the network device indicates, by using the first capability enquiry information including the filter condition, the terminal device to report one or more of the first band, the first MSD source, the first power value, or the first MSD threshold in the method 400. Details are not described herein again by using examples.

In comparison with that the terminal device reports, to the network device, the MSD improvement capabilities of all band combinations that support the MSD improvement, in a solution provided in this application, first, the terminal device does not need to report all MSD improvement capabilities in the UE capability, but reports only an MSD improvement capability of one carrier group based on the first carrier group configured by the network after receiving the configuration information of the network, to reduce signaling overheads. Second, the terminal device may determine the frequency-domain position, the carrier bandwidth, and the like of the carrier in the first carrier group based on the configuration information, to more accurately determine the MSD improvement capability of the first carrier group. Third, the network device may indicate, by using the fifth indication information, the MSD improvement capability that is expected to be reported by the UE, for example, MSD improvement for the second band, the third MSD source, the third power value, and the second MSD threshold, to reduce the signaling overheads for reporting the capability by the terminal device, and memory overheads of storing the MSD improvement capability by the network device and the terminal device.

Because parameters such as the frequency position and the carrier bandwidth of the carrier in the first carrier group configured by the network device are different, the MSD is also different. Therefore, the terminal device may more accurately report the MSD improvement capability based on the configuration information (for example, configuration parameters such as the carrier bandwidth, the frequency position, and the SCS) of the first carrier group, so that the network device better determines a proper scheduling policy for the first carrier group, to improve resource utilization. For example, if the terminal device reports that the first carrier group (for example, carrier 1+carrier 2) can perform MSD improvement for harmonic interference, the network device may simultaneously schedule uplink transmission of one carrier (for example, a carrier 1) and downlink transmission of another carrier (for example, a carrier 2) without scheduling at different moments in time domain. Alternatively, if the terminal device reports that the first carrier group (for example, carrier 1+carrier 2+carrier 3) can perform MSD improvement for intermodulation interference, the network may simultaneously schedule uplink transmission of two carriers (for example, carrier 1+carrier 2), and does not need to perform single uplink scheduling, to improve scheduling flexibility of the network device, and improve resource utilization efficiency and throughput.

Optionally, before the terminal device receives the configuration information from the network device, the method 500 further includes: receiving second capability enquiry information sent by the network device; and reporting second capability information to the network device, where the second capability information includes capability information of the M carrier groups supported by the terminal device.

The network device obtains the capability information of the terminal device by using the second capability enquiry information, and the terminal device reports the capability information to the network device by using the second capability information. The capability information includes a capability of a band combination supported by the terminal device, a capability of a band in a band combination supported by the terminal device, and a capability of a carrier in a band combination. For example, the capability information includes the capability information of the M carrier groups supported by the terminal device, each carrier group of the M carriers is a combination of carriers in one band combination supported by the terminal device, and the terminal device supports carrier aggregation transmission or dual connectivity transmission on carriers in one carrier group. The network device configures the first carrier group based on the capability of the band combination, where the first carrier group is a part of the M carrier groups.

In this embodiment, the terminal device reports the capability information of the supported M carrier groups to the network device based on the second enquiry information, so that the network device performs frequency domain configuration and bandwidth configuration on the M carrier groups.

In an embodiment, the second capability information further indicates that the terminal device has the MSD improvement capability.

The terminal device may indicate, by using indication information X2 (for example, a field Y) in the second capability information, that the terminal device has the MSD improvement capability. That is, the terminal device reports, to the network device by using the indication information X2, whether the terminal device supports the MSD improvement capability.

For example, the indication information X2 may indicate, at per terminal device (for example, UE) level by using 1 bit, whether the MSD improvement capability is supported or not supported. For example, when the indication information X2 is 1, it indicates that the terminal device supports the MSD improvement capability; or when the indication information X2 is 0 or the indication information X2 is not carried, it indicates that the terminal device does not support the MSD improvement capability.

For another example, the indication information X2 may further indicate, at per band combination level by using 1 bit, the MSD improvement capability supported or not supported by the terminal device (for example, the UE). That is, the terminal device indicates, by using the indication information X2, whether the MSD improvement capability is supported or not supported for each band combination reported in the second capability information. For example, when the indication information X2 is 1, it indicates that a band combination C22 supports the MSD improvement capability; or when the indication information X2 is 0 or the indication information X2 is not carried, it indicates that a band combination C22 does not support the MSD improvement capability.

For another example, the indication information X2 may further indicate, at per band level by using 1 bit, the MSD improvement capability of a band supported or not supported by the terminal device (for example, the UE).

Optionally, regardless of whether the MSD improvement capability supported by the terminal device is indicated at per terminal device level, per band combination level, or per band level, the terminal device indicates, by using indication information X3 in the second capability information, information such as an MSD source (for example, second-order harmonic interference) for MSD improvement supported at per terminal device level.

After receiving the second capability information, the network device determines, based on the second capability information, the M carrier groups supported by the terminal device. Optionally, when the second capability information includes the indication information X2, the network device determines, based on the indication information X2, whether the terminal device supports the MSD improvement capability. For example, the indication information X2 indicates, by using 1 bit, the MSD improvement capability supported or not supported at per terminal device (for example, UE) level. When the indication information X2 is 1, the network device determines that the terminal device supports the MSD improvement capability; or when the indication information X2 is 0 or the indication information X2 is not carried, the network device determines that the terminal device does not support the MSD improvement capability.

The network device receives, by using the second capability information, an MSD improvement capability supported at per terminal device level and reported by the terminal device, or an MSD improvement capability supported at per band combination level, or an MSD improvement capability supported at per band level, so that when configuring the first carrier group for the terminal device, the network device accurately requests the terminal device having the MSD improvement capability to report the MSD improvement capability, or requests the first carrier group in the band combination supporting the MSD improvement capability to report the MSD improvement capability, or requests the first carrier group including carriers at a band supporting the MSD improvement capability to report the MSD improvement capability, to avoid extra resource overheads generated when the network device blindly sends an enquiry for the MSD improvement capability to a terminal device that does not support the MSD improvement capability.

S502: The terminal device sends first information to the network device based on the configuration information, and correspondingly, the network device receives the first information sent by the terminal device, where the first information includes the MSD improvement capability of the terminal device for the first carrier group.

The first information is used by the terminal device to report the MSD improvement capability of the first carrier group to the network device. In an embodiment, the first information is carried in a radio resource control (Radio Resource Control, RRC) reconfiguration (Reconfiguration) complete message or an RRC resume complete message.

The terminal device reports, based on the RRC reconfiguration message (that is, the configuration message used for RRC connection configuration) sent by the network device, the MSD improvement capability of the first carrier group to the network device in the RRC reconfiguration complete message or the RRC resume complete message. Before scheduling the first carrier group for data transmission, the network device reports the MSD improvement capability of the terminal device to the network device, to assist the network device in properly scheduling the first carrier group for uplink and downlink transmission, and improve performance of an entire wireless communication system.

In an embodiment, the terminal device reports, in the second capability information, the MSD improvement capability supported by the terminal device at per terminal device level, at per band combination level, or at per band level. The terminal device may report, in the first information based on a reporting status, the MSD improvement capability supported by the terminal device in detail for different levels. For example, if the terminal device reports, in the second capability information, the MSD improvement capability supported by the terminal device at per band combination level, the terminal device may report, in the first information, an MSD improvement capability of a first carrier group in the band combination. For example, if the terminal device supports an MSD improvement capability of a first carrier group (for example, (carrier 1+carrier 2+carrier 3) or (carrier 1+carrier 3+carrier 5)) in the band combination C22, the terminal device may report the MSD improvement capability of the first carrier group (for example, (carrier 1+carrier 2+carrier 3) or (carrier 1+carrier 3+carrier 5)).

For another example, if the terminal device reports, at per band level in the second capability information, the MSD improvement capability supported by the terminal device, the terminal device may report, in the first information, an MSD improvement capability of a first carrier group including carriers at a band in a band combination. For example, a band combination C44 supported by the terminal device is (band 1+band 2+band 4). If the terminal device supports an MSD improvement capability of a first carrier group including carriers at a band 1 (or a band 1 or a band 4), the terminal device reports the MSD improvement capability of the first carrier group including the carriers at the band 1 (or the band 1 or the band 4).

The terminal device reports, to the network device by using the first information, the MSD improvement capability of the first carrier group. In an embodiment, the MSD improvement capability of the first carrier group includes one or more of the following: a second victim carrier, a second aggressor carrier, a fourth MSD source, a fourth power value, or a second MSD value.

The MSD improvement capability of the first carrier group includes the second victim carrier. In a possible implementation, the first information includes an identifier of the second victim carrier, the second victim carrier may be replaced with a second victim cell, and the identifier of the second victim carrier may be replaced with an identifier of the second victim cell (for example, a unique number of the victim cell).

The MSD improvement capability of the first carrier group includes the second aggressor carrier. In a possible implementation, the first information includes an identifier of the second aggressor carrier, the second aggressor carrier may be replaced with a second aggressor cell, and the identifier of the second aggressor carrier may be replaced with an identifier of the second aggressor cell (for example, a unique number of the aggressor cell).

In a possible design, the terminal device determines the MSD improvement capability of the first carrier group based on the configuration parameters such as a bandwidth size of a carrier and a frequency-domain position of a carrier in the configuration information. For carriers that belong to a frequency range of a same band but have different configuration parameters, MSD improvement capabilities reported by the UE may be different. For example, the configuration information sent by the network includes configuration information of a carrier 1, a carrier 2, and a carrier 3. Both the carrier 1 and the carrier 2 are carriers at a band A, but have different frequency-domain positions. The carrier 3 is a carrier at a band B. In a case in which the terminal device supports the carrier 3 as an aggressor carrier, an MSD improvement value of the carrier 1 as a victim carrier is A, and an MSD improvement value of the carrier 2 as a victim carrier is B. In this case, the terminal device may separately report the MSD improvement values of the carrier 1 and the carrier 2.

For related descriptions of the second victim carrier, the second aggressor carrier, the fourth MSD source, the fourth power value, or the second MSD value, refer to related descriptions of the first victim band, the first aggressor band, the second MSD source, the second power value, or the first MSD value in the method 400. Details are not described herein again.

The second victim carrier may be replaced with the identifier of the second victim cell (for example, the unique number of the victim cell).

It should be understood that, the terminal device reports the MSD improvement capability of the first carrier group for MSD improvement, and does not report the MSD improvement capability of the first carrier group for no MSD improvement. In other words, the first information does not carry a related field for the MSD improvement capability. When the terminal device does not report the MSD improvement capability to the network device, the network device determines an MSD source and an MSD value of the first carrier group based on a worst case predefined in the protocol.

For example, the first carrier group includes three carriers: a carrier 1, a carrier 2, and a carrier 3. When reporting the MSD improvement capability of the first carrier group, the terminal device may report a victim carrier, an aggressor carrier, an MSD source, and an MSD improvement value in the first carrier group. For example, the terminal device may specifically report specific capability information that the carrier 1 is a victim carrier, the carrier 2 and the carrier 3 are aggressor carriers, the MSD source is third-order intermodulation interference, and the MSD value is N1.

For another example, the terminal device may report the MSD improvement capability of the first carrier group in a form of Table 5. It can be learned from Table 5 that, for a same victim carrier (for example, a carrier A), the terminal device may report an MSD improvement capability of one or more interference types. For example, the aggressor carrier may be a carrier B or a carrier D. The aggressor carriers may be the same or different. For a same aggressor carrier (for example, a carrier C), the victim carrier may be one or more carriers (for example, victim carriers of the carrier A and the carrier B), and one aggressor carrier and at least one victim carrier may cause interference of one or more interference types. It should be understood that, in a carrier group, a plurality of combinations of {victim carrier, aggressor carrier} may exist. For example, in a carrier group of (carrier A+carrier B+carrier C+carrier D), a plurality of combinations of {victim carrier, aggressor carrier} may exist, for example, (carrier A+carrier B), where the carrier A is a victim carrier, and the carrier B is an aggressor carrier; or for another example, (carrier B+carrier D), where the carrier B is a victim carrier, and the carrier D is an aggressor carrier.

**Table 5**

| Victim carrier | Aggressor carrier | MSD type | MSD order | MSD improvement value | First carrier group |
|---|---|---|---|---|---|
| Carrier A | Carrier C and carrier D | Intermodulation interference | Second-order | N1 | Carrier A+carrier C+carrier D |
| Carrier A | Carrier C | Harmonic interference | Third-order | N1 | Carrier A+carrier C |
| Carrier B | Carrier C | Harmonic interference | / | N2 | Carrier B+carrier C |

In this embodiment, the network device receives detailed information of the MSD improvement capability of the first carrier group reported by the terminal device, for example, the information such as the second victim carrier, the second aggressor carrier, the fourth MSD source, the fourth power value, and the second MSD value, to help the network device determine a proper band configuration policy and a proper scheduling policy based on the detailed information.

After receiving the first information, the network device parses the first information, to obtain the MSD improvement capability of the first carrier group. The network device determines a proper scheduling policy for a carrier in the first carrier group based on the MSD improvement capability of the first carrier group, to improve resource utilization and improve receiving performance of the terminal device.

In conclusion, in comparison with a case in which the terminal device reports, in the capability information, MSD improvement capabilities supported by all band combinations to the network device, in this application, the terminal device reports, based on the first carrier group configured by the network device and a request for enquiring the MSD improvement capability of the first carrier group by the network device, the MSD improvement capability of the first carrier group in a targeted manner, to effectively reduce signaling overheads for reporting the MSD improvement capability. In addition, after receiving the configuration information of the first carrier group, the terminal device may obtain information such as a frequency domain configuration of a carrier and a bandwidth configuration of a carrier. Therefore, the terminal device may more accurately report the MSD improvement capability of the first carrier group based on the information such as a frequency-domain position and a bandwidth size of the carrier, so that the network device can better schedule the first carrier group.

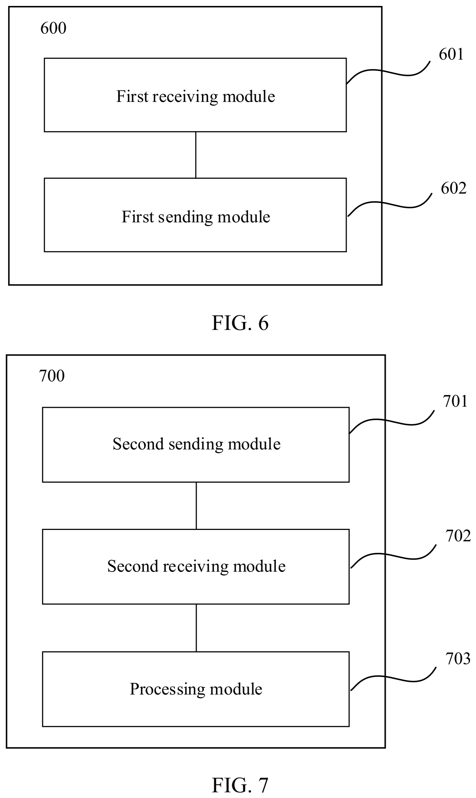

FIG. 6 shows a communication apparatus 600 according to this application. The communication apparatus 600 may be configured to implement a function of the terminal device in the method embodiment shown in FIG. 4. The communication apparatus 600 includes a first receiving module 601 and a first sending module 602. The first receiving module 601 is configured to receive first capability enquiry information from a network device; and the first sending module 602 is configured to report first capability information to the network device, where the first capability information indicates capability information of K band combinations supported by a terminal device and an MSD improvement capability of the terminal device for N band combinations, the N band combinations are combinations of bands in the K band combinations, K is a positive integer, and N is a positive integer.

For a specific manner in which the communication apparatus 600 performs the method for reporting capability information and generated beneficial effects, refer to related descriptions in the method embodiment shown in FIG. 4.

In the communication apparatus 600, the first capability information includes first indication information and second indication information, the first indication information indicates the K band combinations supported by the terminal device, and the second indication information indicates the MSD improvement capability of the terminal device for the N band combinations. For beneficial effects of this part, refer to the foregoing embodiment.

In the communication apparatus 600, the first capability enquiry information includes a filter condition used for enquiring the MSD improvement capability, and the filter condition includes one or more of the following: a first band, a first MSD source, a first power value, or a first MSD threshold. For beneficial effects of this part, refer to the foregoing embodiment.

In the communication apparatus 600, the first capability information includes third indication information, and the third indication information indicates that an MSD improvement value of any MSD source of a first band combination is less than or equal to a first threshold, or indicates that the first band combination does not have the MSD improvement capability, where the first band combination is any one of the K band combinations or the N band combinations. For beneficial effects of this part, refer to the foregoing embodiment.

In the communication apparatus 600, an MSD improvement capability of each of the N band combinations includes one or more of the following: a first victim band, a first aggressor band, a second MSD source, a second power value, or a first MSD value. For beneficial effects of this part, refer to the foregoing embodiment.

In the communication apparatus 600, the first capability information further includes fourth indication information, and the fourth indication information indicates one or more of an MSD source, an aggressor band, or an MSD improvement value of one band in the N band combinations. For beneficial effects of this part, refer to the foregoing embodiment.

For more detailed descriptions of the first receiving module 601 and the first sending module 602, refer to related descriptions in the foregoing method embodiment. Details are not described herein again.

FIG. 7 shows a communication apparatus 700 according to this application. The communication apparatus 700 may be configured to implement a function of the network device in the method embodiment shown in FIG. 4. The communication apparatus 700 includes a second sending module 701 and a second receiving module 702.

The second sending module 701 is configured to send first capability enquiry information to a terminal device; and the second receiving module 702 is configured to receive first capability information from the terminal device, where the first capability information indicates capability information of K band combinations supported by the terminal device and a maximum sensitivity degradation MSD improvement capability of the terminal device for N band combinations, the N band combinations are combinations of bands in the K band combinations, K is a positive integer, and N is a positive integer.

For a specific manner in which the communication apparatus 700 performs the method for receiving capability information and generated beneficial effects, refer to related descriptions in the method embodiment shown in FIG. 4.

In the communication apparatus 700, the first capability information includes first indication information and second indication information, the first indication information indicates the K band combinations supported by the terminal device, and the second indication information indicates the MSD improvement capability of the terminal device for the N band combinations. The apparatus further includes a processing module 703, and after receiving the first capability information from the terminal device, the processing module 703 is configured to: determine a target band combination based on the first indication information, where the target band combination is any one of the K band combinations; and determine an MSD improvement capability of the target band combination based on the second indication information. For beneficial effects of this part, refer to the foregoing embodiment.

In the communication apparatus 700, the first capability enquiry information includes a filter condition used for enquiring the MSD improvement capability, and the filter condition includes one or more of the following: a first band, a first MSD source, a first power value, or a first MSD threshold. For beneficial effects of this part, refer to the foregoing embodiment.

In the communication apparatus 700, the first capability information includes third indication information, and the third indication information indicates that an MSD improvement value of any MSD source of a first band combination is less than or equal to a first threshold, or indicates that the first band combination does not have the MSD improvement capability, where the first band combination is any one of the K band combinations or the N band combinations. For beneficial effects of this part, refer to the foregoing embodiment.

In the communication apparatus 700, an MSD improvement capability of each of the N band combinations includes one or more of the following: a first victim band, a first aggressor band, a second MSD source, a second power value, or a first MSD value. For beneficial effects of this part, refer to the foregoing embodiment.

In the communication apparatus 700, the first capability information further includes fourth indication information, and the fourth indication information indicates one or more of an MSD source, an aggressor band, or an MSD improvement value of one band in the N band combinations. For beneficial effects of this part, refer to the foregoing embodiment.

For more detailed descriptions of the second sending module 701 and the second receiving module 702, refer to related descriptions in the foregoing method embodiment. Details are not described herein again.

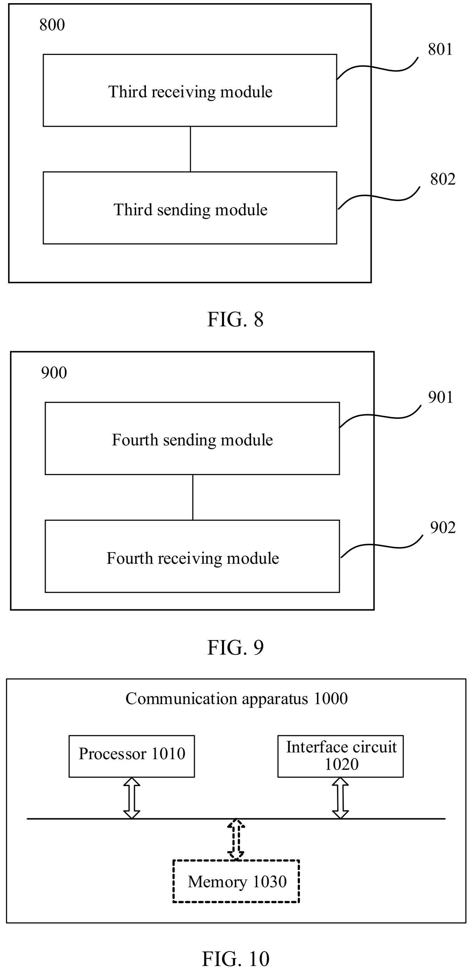

FIG. 8 shows a communication apparatus 800 according to this application. The communication apparatus 800 may be configured to implement a function of the terminal device in the method embodiment shown in FIG. 5. The communication apparatus 800 includes a third receiving module 801 and a third sending module 802. The third receiving module 801 is configured to receive configuration information from a network device, where the configuration information indicates a configuration parameter of a first carrier group and indicates a terminal device to send a maximum sensitivity degradation MSD improvement capability of the first carrier group, the first carrier group is a part of M carrier groups, the M carrier groups are M carrier groups supported by the terminal device, and M is a positive integer; and the third sending module 802 is configured to send first information to the network device based on the configuration information, where the first information includes the MSD improvement capability of the terminal device for the first carrier group.

For a specific manner in which the communication apparatus 800 performs the method for reporting capability information and generated beneficial effects, refer to related descriptions in the method embodiment shown in FIG. 5.

In the communication apparatus 800, the configuration information further includes fifth indication information, and the fifth indication information indicates the terminal device to report the MSD improvement capability for one or more of the following: a second band, a third MSD source, a third power value, and a second MSD threshold. For beneficial effects of this part, refer to the foregoing embodiment.

In the communication apparatus 800, the first information is carried in a radio resource control RRC reconfiguration complete message or an RRC resume complete message. For beneficial effects of this part, refer to the foregoing embodiment.

In the communication apparatus 800, the second capability information further indicates that the terminal device has the MSD improvement capability. For beneficial effects of this part, refer to the foregoing embodiment.

In the communication apparatus 800, the MSD improvement capability of the first carrier group includes one or more of the following: a second victim carrier, a second aggressor carrier, a fourth MSD source, a fourth power value, or a second MSD value. For beneficial effects of this part, refer to the foregoing embodiment.

For more detailed descriptions of the third receiving module 801 and the third sending module 802, refer to related descriptions in the foregoing method embodiment. Details are not described herein again.

FIG. 9 shows a communication apparatus 900 according to this application. The communication apparatus 900 may be configured to implement a function of the network device in the method embodiment shown in FIG. 5. The communication apparatus 900 includes a fourth sending module 901 and a fourth receiving module 902.

The fourth sending module 901 is configured to send configuration information to a terminal device, where the configuration information indicates a configuration parameter of a first carrier group and indicates the terminal device to send a maximum sensitivity degradation MSD improvement capability of the first carrier group, the first carrier group is a part of M carrier groups, the M carrier groups are M carrier groups supported by the terminal device, and M is a positive integer; and the fourth receiving module 902 is configured to receive first information sent by the terminal device, where the first information includes the MSD improvement capability of the terminal device for the first carrier group.

For a specific manner in which the communication apparatus 900 performs the method for receiving capability information and generated beneficial effects, refer to related descriptions in the method embodiment shown in FIG. 5.

In the communication apparatus 900, the configuration information further includes fifth indication information, and the fifth indication information indicates the terminal device to report the MSD improvement capability for one or more of the following: a second band, a third MSD source, a third power value, and a second MSD threshold. For beneficial effects of this part, refer to the foregoing embodiment.

In the communication apparatus 900, the first information is carried in a radio resource control RRC reconfiguration complete message or an RRC resume complete message. For beneficial effects of this part, refer to the foregoing embodiment.

In the communication apparatus 900, the second capability information further indicates that the terminal device has the MSD improvement capability. For beneficial effects of this part, refer to the foregoing embodiment.

In the communication apparatus 900, the MSD improvement capability of the first carrier group includes one or more of the following: a second victim carrier, a second aggressor carrier, a fourth MSD source, a fourth power value, or a second MSD value. For beneficial effects of this part, refer to the foregoing embodiment.

For more detailed descriptions of the fourth sending module 901 and the fourth receiving module 902, refer to related descriptions in the foregoing method embodiment. Details are not described herein again.

As shown in FIG. 10, a communication apparatus 1000 includes a processor 1010 and an interface circuit 1020. The processor 1010 and the interface circuit 1020 are coupled to each other. It may be understood that, the interface circuit 1020 may be a transceiver or an input/output interface. Optionally, the communication apparatus 1000 may further include a memory 1030, configured to: store instructions to be executed by the processor 1010, store input data required by the processor 1010 to run the instructions, or store data generated after the processor 1010 runs the instructions.

When the communication apparatus 1000 is configured to implement the method in the foregoing method embodiment, the processor 1010 is configured to execute a computer program or instructions, so that the interface circuit 1020 is configured to perform functions of the first receiving module and the first sending module, functions of the second sending module and the second receiving module, functions of the third receiving module and the third sending module, or functions of the fourth sending module and the fourth receiving module.

When the communication apparatus is a chip used in a terminal device, the chip in the terminal device implements a function of the terminal device in the foregoing method embodiment. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements a function of the network device in the foregoing method embodiment. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may alternatively exist in the access network device or the terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedure or functions according to embodiments of this application are all or partially generated. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by a computer, or a data storage device, for example, a server, integrating one or more usable media. The usable medium may be a magnetic medium, for example, a floppy disk, a hard disk drive, or a magnetic tape; may be an optical medium, for example, a DVD; or may be a semiconductor medium, for example, a solid-state drive (solid-state drive, SSD).

In embodiments of this application, unless otherwise specified or there is a logic conflict, terms and/or descriptions in different embodiments are consistent and may be referenced by each other. Technical features in different embodiments may be combined to form a new embodiment based on an internal logical relationship.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that, various numbers in embodiments of this application are merely used for differentiation for ease of descriptions, and are not used to constitute a limitation on the scope of embodiments of this application. Sequence numbers of the foregoing processes do not mean an execution sequence, and the execution sequence of the processes should be determined based on functions and internal logic of the processes.

## Claims

1. A method for reporting capability information, wherein the method comprises:
receiving first capability enquiry information from a network device; and
reporting first capability information to the network device, wherein the first capability information indicates capability information of K band combinations supported by a terminal device and a maximum sensitivity degradation MSD improvement capability of the terminal device for N band combinations, the N band combinations are combinations of bands in the K band combinations, K is a positive integer, and N is a positive integer.

2. The method according to claim 1, wherein the first capability information comprises first indication information and second indication information, the first indication information indicates the K band combinations supported by the terminal device, and the second indication information indicates the MSD improvement capability of the terminal device for the N band combinations.

3. The method according to claim 1 or 2, wherein the first capability enquiry information comprises a filter condition used for enquiring the MSD improvement capability, and the filter condition comprises one or more of the following:
a first band, a first MSD source, a first power value, or a first MSD threshold.

4. The method according to any one of claims 1 to 3, wherein the first capability information comprises third indication information, and the third indication information indicates that an MSD improvement value of any MSD source of a first band combination is less than or equal to a first threshold, or indicates that the first band combination does not have the MSD improvement capability, wherein the first band combination is any one of the K band combinations or the N band combinations.

5. The method according to any one of claims 1 to 3, wherein an MSD improvement capability of each of the N band combinations comprises one or more of the following: a first victim band, a first aggressor band, a second MSD source, a second power value, or a first MSD value.

6. The method according to claim 1, wherein the first capability information further comprises fourth indication information, and the fourth indication information indicates one or more of an MSD source, an aggressor band, or an MSD improvement value of one band in the N band combinations.

7. A method for receiving capability information, wherein the method comprises:
sending first capability enquiry information to a terminal device; and
receiving first capability information from the terminal device, wherein the first capability information indicates capability information of K band combinations supported by the terminal device and a maximum sensitivity degradation MSD improvement capability of the terminal device for N band combinations, the N band combinations are combinations of bands in the K band combinations, K is a positive integer, and N is a positive integer.

8. The method according to claim 7, wherein the first capability information comprises first indication information and second indication information, the first indication information indicates the K band combinations supported by the terminal device, and the second indication information indicates the MSD improvement capability of the terminal device for the N band combinations; and
after receiving the first capability information from the terminal device, the method further comprises:
determining a target band combination based on the first indication information, wherein the target band combination is any one of the K band combinations; and
determining an MSD improvement capability of the target band combination based on the second indication information.

9. The method according to claim 7 or 8, wherein the first capability enquiry information comprises a filter condition used for enquiring the MSD improvement capability, and the filter condition comprises one or more of the following:
a first band, a first MSD source, a first power value, or a first MSD threshold.

10. The method according to any one of claims 7 to 9, wherein the first capability information comprises third indication information, and the third indication information indicates that an MSD improvement value of any MSD source of a first band combination is less than or equal to a first threshold, or indicates that the first band combination does not have the MSD improvement capability, wherein the first band combination is any one of the K band combinations or the N band combinations.

11. The method according to any one of claims 7 to 10, wherein an MSD improvement capability of each of the N band combinations comprises one or more of the following: a first victim band, a first aggressor band, a second MSD source, a second power value, or a first MSD value.

12. The method according to claim 7, wherein the first capability information further comprises fourth indication information, and the fourth indication information indicates one or more of an MSD source, an aggressor band, or an MSD improvement value of one band in the N band combinations.

13. A method for reporting capability information, wherein the method comprises:
receiving configuration information from a network device, wherein the configuration information indicates a configuration parameter of a first carrier group and indicates a terminal device to send a maximum sensitivity degradation MSD improvement capability of the first carrier group, the first carrier group is a part of M carrier groups, the M carrier groups are M carrier groups supported by the terminal device, and M is a positive integer; and
sending first information to the network device based on the configuration information, wherein the first information comprises the MSD improvement capability of the terminal device for the first carrier group.

14. The method according to claim 13, wherein the configuration information further comprises fifth indication information, and the fifth indication information indicates the terminal device to report the MSD improvement capability for one or more of the following: a second band, a third MSD source, a third power value, or a second MSD threshold.

15. The method according to claim 13 or 14, wherein the first information is carried in a radio resource control RRC reconfiguration complete message or an RRC resume complete message.

16. The method according to any one of claims 13 to 15, wherein the second capability information further indicates that the terminal device has the MSD improvement capability.

17. The method according to any one of claims 13 to 16, wherein the MSD improvement capability of the first carrier group comprises one or more of the following: a second victim carrier, a second aggressor carrier, a fourth MSD source, a fourth power value, or a second MSD value.

18. A method for receiving capability information, wherein the method comprises:
sending configuration information to a terminal device, wherein the configuration information indicates a configuration parameter of a first carrier group and indicates the terminal device to send a maximum sensitivity degradation MSD improvement capability of the first carrier group, the first carrier group is a part of M carrier groups, the M carrier groups are M carrier groups supported by the terminal device, and M is a positive integer; and
receiving first information sent by the terminal device, wherein the first information comprises the MSD improvement capability of the terminal device for the first carrier group.

19. The method according to claim 18, wherein the configuration information further comprises fifth indication information, and the fifth indication information indicates the terminal device to report the MSD improvement capability for one or more of the following: a second band, a third MSD source, a third power value, or a second MSD threshold.

20. The method according to claim 18 or 19, wherein the first information is carried in a radio resource control RRC reconfiguration complete message or an RRC resume complete message.

21. The method according to any one of claims 18 to 20, wherein the second capability information further indicates that the terminal device has the MSD improvement capability.

22. The method according to any one of claims 18 to 21, wherein the MSD improvement capability of the first carrier group comprises one or more of the following: a second victim carrier, a second aggressor carrier, a fourth MSD source, a fourth power value, or a second MSD value.

23. A communication apparatus, wherein the communication apparatus comprises a module configured to perform the method according to any one of claims 1 to 6, or comprises a module configured to perform the method according to any one of claims 7 to 12, or comprises a module configured to perform the method according to any one of claims 13 to 17, or comprises a module configured to perform the method according to any one of claims 18 to 22.

24. A communication apparatus, wherein the communication apparatus comprises at least one processor, and
the processor is configured to execute a computer program or instructions to implement the method according to any one of claims 1 to 6, or implement the method according to any one of claims 7 to 12, or implement the method according to any one of claims 13 to 17, or implement the method according to any one of claims 18 to 22.

25. A computer-readable storage medium, comprising instructions, wherein when the instructions are run on a communication apparatus, the method according to any one of claims 1 to 6 is performed, or the method according to any one of claims 7 to 12 is performed, or the method according to any one of claims 13 to 17 is performed, or the method according to any one of claims 18 to 22 is performed.

26. A communication system, wherein the communication system comprises:
an access network device configured to perform the method according to any one of claims 1 to 6, and a terminal configured to perform the method according to any one of claims 7 to 12; or
an access network device configured to perform the method according to any one of claims 13 to 17, and a terminal configured to perform the method according to any one of claims 18 to 22.

27. A computer program product, wherein the computer program product comprises computer instructions; and when a part or all of the computer instructions are run on a computer, the method according to any one of claims 1 to 6 is performed, or the method according to any one of claims 7 to 12 is performed, or the method according to any one of claims 13 to 17 is performed, or the method according to any one of claims 18 to 22 is performed.
